# EUROPÄISCHE PATENTSCHRIFT

(11) **EP 3 577 041 B1**
(45) Veröffentlichungstag und Bekanntmachung des Hinweises auf die Patenterteilung: **10.07.2024**
(21) Anmeldenummer: 18702823.8
(22) Anmeldetag: 25.01.2018
(51) Int. Cl.: B65G 17/20, B65G 17/48, B65G 47/61

(54) **VORRICHTUNG UND VERFAHREN ZUM DREHEN, ÖFFNEN UND BEFÜLLEN HÄNGEND GEFÖRDERTER TRANSPORTTASCHEN**
DEVICE AND METHOD FOR TURNING, OPENING AND FILLING TRANSPORT BAGS CONVEYED IN A SUSPENDED MANNER
DISPOSITIF ET PROCÉDÉ POUR FAIRE TOURNER, OUVRIR ET REMPLIR DES SACS DE TRANSPORT QUI SONT TRANSPORTÉS SUSPENDUS

(30) Priorität: 31.01.2017 CH 1102017; 20.06.2017 CH 7962017
(43) Veröffentlichungstag der Anmeldung: 11.12.2019
(73) Patentinhaber: Ferag AG, 8340 Hinwil (CH)
(72) Erfinder: STAUBER, Erwin, 8624 Grüt (CH)
(74) Vertreter: IPrime Rentsch Kaelin AG
(86) Internationale Anmeldenummer: PCT/IB2018/050445
(87) Internationale Veröffentlichungsnummer: WO 2018/142242

(56) Entgegenhaltungen:
- EP-A1- 2 418 160
- DE-A1- 10 354 419
- DE-A1- 102008 026 720
- DE-A1- 102012 018 925
- DE-A1- 102014 203 298
- FR-A1- 2 647 762
- JP-A- S5 237 381
- JP-U- S5 241 873
- JP-U- S60 176 868
- US-A- 2 609 082

## Beschreibung

### Technisches Gebiet

Die vorliegende Erfindung bezieht sich auf das Gebiet der Transport- und Fördertechnik. Sie betrifft eine Fördereinheit zum hängenden Transport von Transportelementen, insbesondere Transporttaschen, Kleiderbügeln und Behälter-Haltevorrichtungen, in einem Fördersystem, insbesondere einem schienengeführten Fördersystem oder einem Förderkettensystem. Sie betrifft weiter ein Fördersystem mit solchen Fördereinheiten, ein Verfahren zum Einbringen von Stückgut in Transportelemente eines Fördersystems, und ein Verfahren zur visuellen Inspektion von Kleiderbügeln oder auf Kleiderbügeln aufgehängten Kleidungsstücken oder Behältern.

### Technologischer Hintergrund

In automatisierten Warenlagern, weitläufigen Produktionsstätten und ganz allgemein bei der Förderung und dem Transport von Waren haben sich Hängefördersysteme als ein effizientes Mittel für den Transport, die Zwischenpufferung, aber auch die langfristige Lagerung verschiedener Arten von Waren erwiesen. Bei Hängefördersystemen werden die Waren entweder auf geeignete Weise direkt an einzelnen Förderelementen eines Fördersystems aufgehängt, beispielsweise Kleiderbügel mit daran aufgehängten Kleidungsstücken, oder in entsprechende Transportelemente wie beispielsweise Transporttaschen eingebracht, die wiederum hängend an den Förderelementen gelagert sind.

Hängefördersysteme können als Transportkettenanlagen realisiert sein, bei welchen eine Vielzahl von Förderelementen Glieder einer Kette bilden, die entlang eines Förderwegs bewegt wird.

Ebenfalls bekannt sind schwerkraftgeförderte Fördersysteme, bei welchen sich einzelne mit Rädern ausgestattete Förderelemente auf entsprechenden Laufschienen bewegen. Ein Beispiel eines solchen schwerkraftgeförderten, schienengeführten Fördersystems ist aus der WO 2016/030275 A1 der Anmelderin bekannt.

Hängefördersysteme mit Transportelementen sind besonders geeignet für die effiziente Förderung von heterogenen Stückgut-Waren, wie beispielsweise Werkstücken in Produktionsprozessen, Ersatzteilen, Konsumgütern wie Büchern, Kleidern, Schuhen, etc.

So können beispielsweise in Logistikzentren von Versandhandelsfirmen Hängefördersysteme verwendet werden, um eine Vielzahl von Artikeln verschiedener Grösse und Gewicht einzulagern, und Gruppen von Artikeln gemäss den jeweiligen Kundenaufträgen zu kommissionieren und für den Versand bereitzustellen.

Ein für ein Hängefördersystem relevanter Aspekt ist dabei das einfache, reibungslose und effiziente Einbringen von Waren in leere Transportelemente und Entnehmen der Waren aus dem Transportelementen.

Ein manuelles Befüllen von bereitgestellten leeren Transportelementen wie beispielsweise Transporttaschen erlaubt eine flexible Handhabung verschiedener Waren, ist jedoch langsam und kostenintensiv.

EP 2196415 A2 beschreibt eine Beladestation für in einer Hängeförderanlage transportierte Transporttaschen. Die Transporttaschen weisen in Förderrichtung eine versteifte Wand mit einem Aufhängehaken an einem oberen Ende auf, welcher an einem Laufwagen aufgehängt ist. Die Wand ist quer zur Förderrichtung ausgerichtet. Eine Stoffbahn ist an einem am oberen Ende der Wand angebrachten schwenkbaren Rahmenbügel und am unteren Ende der Wand angebracht, so dass ein seitlich offener Beutel gebildet wird. Eine leere Transporttasche wird über einen Kettenvortrieb senkrecht von oben zugeführt. Durch entsprechende seitliche Führungselemente am Rahmenbügel und am unteren Ende der Wand wird dabei die Tasche in einen offenen Zustand gebracht, und über ein Förderband und eine Rutsche befüllt. Die befüllte Transporttasche wird anschliessend abgeführt. Beim Befüllungsvorgang muss eine Transporttasche aufwendig über zwei Ecken geführt werden, was den Durchsatz beschränkt und das Bauvolumen der Vorrichtung erhöht.

DE 102004018569 A1 zeigt eine weitere Vorrichtung zum Beladen von Transporttaschen in einer Hängeförderanlage. Die Transporttaschen weisen einen quer zur Förderrichtung an einem Förderelement aufgehängten Rahmenbügel auf, welcher eine obere Öffnung der Tasche definiert. Eine an zwei Enden an dem Rahmenbügel befestigte flexible Stoffbahn bildet einen Beutel zur Aufnahme von Stückgutelementen. Seitenwandungen schliessen nur einen unteren Teil der Seiten des Beutels, so dass seitliche Einwurföffnungen verbleiben. Beim Bewegen der Transporttaschen entlang des Förderwegs durch die Vorrichtung bewegen entsprechend ausgestaltete Kulissen den im leeren Zustand der Transporttasche senkrecht hängenden Rahmenbügel in eine waagrechte Position, in welcher die seitlichen Einwurföffnungen maximal geöffnet sind. Die Artikel können nun manuell durch die seitlichen Öffnungen in die Tasche geworden werden. Eine automatische Befüllung ist nicht möglich, da die oberen Öffnungen der Taschen wegen der Laufschiene des Fördersystems nicht zugänglich sind.

EP 2418160 A1 zeigt eine andere Beladestation für in einer Hängeförderanlage transportierte Transporttaschen. Die Transporttaschen weisen einen an einem Förderelement aufgehängten Rahmenbügel auf, an welchem zwei Enden einer flexiblen Stoffbahn befestigt sind und einen Beutel bilden. Unterhalb des Aufhängehakens des Beutels ist eine Druckplatte angeordnet. In der Beladestation ist eine Kufe angeordnet, welche bei der Bewegung einer Transporttasche durch die Beladestation die Druckplatte und damit auch die Transporttasche von einer Orientierung quer zur Förderrichtung in eine Orientierung parallel zur Förderrichtung drückt und über den Verlauf der Kufe in dieser Orientierung hält. Die Form des Aufhängehakens ist so gewählt, dass dieser dabei im Traghaken des Förderelements weg von einem Minimum der potentiellen Energie nach oben gedrückt wird. Gleichzeitig wird der Rahmenbügel auch senkrecht zur Förderrichtung nach aussen gedrückt, und nimmt eine Lage an, in welcher der Beutel nach oben hin geöffnet ist. In dieser Position kann die Transporttasche von der Seite her durch die obere Öffnung befüllt werden. Nach dem Verlassen des Bereichs der Kufe gleitet der Aufhängehaken auf dem Traghaken wieder zurück zum Minimum der potentiellen Energie, und die Tasche schwenkt zurück in eine Orientierung quer Förderrichtung.

DE 102012018925 A1 offenbart noch eine weitere Beladestation für in einer Hängeförderanlage transportierte Transporttaschen. Die Transporttaschen weisen eine quer zur Förderrichtung an einem Förderelement aufgehängte Rückwand sowie eine Vorderwand und einen Boden auf. Beim Passieren der Beladestation drücken zwei Rampen seitliche Flügelbereiche der Rückwand der Transporttasche nach oben, so dass sich schlussendlich die Tasche mit horizontaler Rückwand in Förderrichtung bewegt. Die Waren können nun seitlich durch die offenen Seiten in die Tasche eingeschoben werden, oder entgegen der Förderrichtung durch die obere Öffnung der Tasche eingeworfen werden.

Es besteht allgemein das Bedürfnis nach Fortschritten in diesem Gebiet der Technik.

US 2609082 zeigt eine Fördereinheit gemäß dem Oberbegriff des Anspruchs 1 und ein Hängefördersystem, bei welchem Laufwagen jeweils paarweise über mehrere Kettenglieder verbunden sind. Die Laufwagen weisen jeweils eine Platte mit einem bogenförmigen Schlitz auf, in welchen ein oberer Haken eines Doppelhakens eingehängt ist. Am unteren Haken des Doppelhakens kann eine Last aufgehängt werden. Verläuft der Förderweg des Hängefördersystems gegenüber der Horizontalen geneigt, liegen die oberen Haken der Doppelhaken im bogenförmigen Schlitz des Traghakens an einer der Neigung des Förderwegs entsprechenden Position.

FR 2647762 A1 zeigt ein kettenbasiertes Hängefördersystem für Kleider auf Bügeln. Ein Gleitelement wird von einem Mitnehmer einer Förderkette in einem Gleitkanal vorwärts geschoben. Ein Koppelelement mit zwei Traghaken ist über einen Distanzbolzen mit dem Gleitelement verbunden. Der Aufhängehaken des Kleiderbügels ist an einem der Tragehaken aufgehängt.

JP S52/37381 A beschreibt ein kettenbasiertes Hängefördersystem, bei welchem ein Traghaken senkrecht drehbar gelagert an einem Förderglied einer Förderkette befestigt ist. Im Traghaken ist ein oberer Haken eines Doppelhakens angeordnet. Über eine auf den Doppelhaken wirkende Kulissenführung oder eine auf den Traghaken wirkende Zahnstange kann der Traghaken um 90° die Senkrechte gedreht werden. Ein ähnliches Hängefördersystem wird in JP S52/41873 U beschrieben.

JP S60/176868 U zeigt ein Hängefördersystem, bei welchem an einem Traghaken ein erster Doppelhaken aufgehängt ist, an welchem wiederum ein zweiter Doppelhaken aufgehängt ist. Der erste Doppelhaken besteht aus zwei relativ zueinander um die Längsachse verdrehbaren Haken. Der zweite Doppelhaken weist ein Kulissenelement auf, welches mit einer Kulissenführung wechselwirkt, und so die beiden Haken des ersten Doppelhakens gegeneinander dreht.

DE 10354419 A1 zeigt aufklappbare Transporttaschen, die an Kleiderbügeln aufgehängt und so in einem Hängefördersystem transportiert werden können.

DE 102008026720 A1 zeigt eine aufklappbare Transporttasche, die mit einem Aufhängehaken an einem Haken eines Hängefördersystems aufgehängt werden kann.

DE102014203298 A1 zeigt eine Vorrichtung zum Befüllen und Entleeren von Transporttaschen eines Hängefördersystems. Ein Hebetisch bringt die Transporttaschen in die Waagrechte, wodurch die Tasche aufklappt, und dreht anschliessend die aufgeklappte Tasche um 90° um die Senkrechte. Das Aufhängemittel der Transporttasche kann ein Schwenkmittel umfassen, welches eine solche 90°-Drehung der Tasche im angehängten Zustand erlaubt.

### Darstellung der Erfindung

Es ist eine Aufgabe der Erfindung, eine Fördereinheit zum hängenden Transport von Transportelementen in einem Fördersystem, insbesondere einem schienengeführten Fördersystem oder einem Förderkettensystem, bereitzustellen, welches eine einfache und effiziente Befüllung der Transportelemente erlaubt, und/oder eine einfache visuelle Inspektion.

Eine andere Aufgabe der Erfindung ist es, ein entsprechendes Fördersystem zur Verfügung zu stellen.

Noch eine weitere Aufgabe der Erfindung ist das Bereitstellen eines Verfahrens zum Einbringen von Stückgut in Transportelemente eines Fördersystems.

Eine andere Aufgabe der Erfindung ist das Bereitstellen eines Verfahrens zur visuellen Inspektion von Kleiderbügeln oder auf Kleiderbügeln aufgehängten Kleidungsstücken oder Behältern.

Diese und andere Aufgaben werden gelöst durch eine erfindungsgemässe Fördereinheit, ein erfindungsgemässes Fördersystem und die erfindungsgemässen Verfahren gemäss den unabhängigen Ansprüchen. Weitere bevorzugte Ausführungsformen sind in den abhängigen Ansprüchen gegeben.

Eine erfindungsgemässe Fördereinheit zum hängenden Transport von Transportelementen in einem Fördersystem, insbesondere einem schienengeführten Fördersystem oder einem Förderkettensystem, umfasst einen an einem Förderelement, insbesondere einem Laufwagen oder einem Förderkettenglied, angebrachten Traghaken, ein Transportelement, und einen am Transportelement angebrachten Aufhängehaken, wobei der Aufhängehaken im Traghaken hängend gelagert ist. Der Traghaken ist derart ausgestaltet, dass der Aufhängehaken im Traghaken mindestens zwei stabile Positionen einnehmen kann, wobei der Aufhängehaken in einer ersten stabilen Position gegenüber dem Aufhängehaken in einer zweiten stabilen Position um einen Winkel gedreht ist.

Der Traghaken und/oder der Aufhängehaken können als geschlossene Ösen ausgestaltet sein, oder als offene oder reversibel verschliessbare Haken.

Vorteilhaft ist der Aufhängehaken derart zwischen der ersten stabilen Position und der zweiten stabilen Position hin und her überführbar, dass der Aufhängehaken konstant auf dem Traghaken aufliegt.

Erfindungsgemäß weist der Traghaken ein erstes Lagerungssegment und ein zweites Lagerungssegment auf; liegt der Aufhängehaken in der ersten stabilen Position auf dem ersten Segment auf, und in der zweiten stabilen Position auf dem zweiten Segment; und ist zwischen dem ersten Segment und dem zweiten Segment ein Verbindungssegment angeordnet, auf dem der Aufhängehaken gleitend zwischen der ersten stabilen Position und der zweiten stabilen Position hin und her überführbar ist.

Bei einer erfindungsgemässen Fördereinheit weist der Traghaken ein erstes Lagerungssegment und ein zweites Lagerungssegment auf; wobei der Traghaken derart ausgestaltet ist, dass in einer bestimmten ersten räumlichen Orientierung des Traghakens der Aufhängehaken auf dem ersten Lagerungssegment eine erste stabile Position einnehmen kann, in der sich der Aufhängehaken in einer ersten Ebene ausrichtet; und in einer bestimmten zweiten räumlichen Orientierung des Traghakens, welche mit der ersten räumlichen Orientierung identisch oder von dieser verschieden sein kann, der Aufhängehaken auf dem zweiten Lagerungssegment eine zweite stabile Position einnehmen kann, in der sich der Aufhängehaken in einer zweiten Ebene ausrichtet; wobei der Aufhängehaken zwischen der ersten Position und der zweiten Position hin und her überführbar ist.

Bei einer erfindungsgemässen Fördereinheit steht die erste Ebene, in welcher sich der Aufhängehaken in der ersten stabilen Position ausrichtet, im Wesentlichen quer zur Förderrichtung; und die zweite Ebene, in welcher sich der Aufhängehaken in der zweiten stabilen Position ausrichtet, steht im Wesentlichen parallel zur Förderrichtung.

Bei einer solchen Fördereinheit ist vorteilhaft der Traghaken derart ausgestaltet, dass in einer bestimmten räumlichen Orientierung des Traghakens der Aufhängehaken auf dem ersten Lagerungssegment die erste stabile Position einnehmen kann, in der sich der Aufhängehaken in der ersten Ebene ausrichtet; und in der gleichen räumlichen Orientierung des Traghakens der Aufhängehaken auf dem zweiten Lagerungssegment die zweite stabile Position einnehmen kann, in der sich der Aufhängehaken in der zweiten Ebene ausrichtet, wobei die erste Position und die zweite Position lokalen Minima der potentiellen Energie des hängend gelagerten Transportelements entsprechen; und wobei der Aufhängehaken durch Drehen des Aufhängehakens um einen bestimmten Drehwinkel zwischen der ersten stabilen Position und der zweiten stabilen Position hin und her überführbar ist.

Der Drehwinkel des Aufhängehakens beträgt vorteilhaft zwischen 0 und 180°, noch vorteilhafter zwischen 45° und 135°, und besonders vorteilhaft zwischen 80° und 100°.

In einer alternativen vorteilhaften Ausgestaltungsform ist bei einer solchen Fördereinheit der Traghaken derart ausgestaltet, dass in einer bestimmten ersten räumlichen Orientierung des Traghakens der Aufhängehaken auf dem ersten Lagerungssegment die erste stabile Position einnehmen kann, in der sich der Aufhängehaken in der ersten Ebene ausrichtet; und in einer von der bestimmten ersten räumlichen Orientierung verschiedenen zweiten räumlichen Orientierung des Traghakens der Aufhängehaken auf dem zweiten Lagerungssegment die zweite stabile Position einnehmen kann, in der sich der Aufhängehaken in der zweiten Ebene ausrichtet, wobei in der bestimmten ersten räumlichen Orientierung des Traghakens die erste Position einem Minimum der potentiellen Energie des hängend gelagerten Transportelements entspricht; in der bestimmten zweiten räumlichen Orientierung des Traghakens die zweite Position einem Minimum der potentiellen Energie des hängend gelagerten Transportelements entspricht; und der Aufhängehaken durch Drehen des Traghakens um einen bestimmten Drehwinkel zwischen der ersten Position und der zweiten Position hin und her überführbar ist.

Der Drehwinkel der Traghakens beträgt vorteilhaft zwischen 0 und 180°, noch vorteilhafter zwischen 30° und 120°, und besonders vorteilhaft zwischen 45° und 90°.

Besonders vorteilhaft ist dabei der Aufhängehaken durch Drehen des Förderelements um die Förderrichtung zwischen der ersten Position und der zweiten Position hin und her überführbar.

In einer weiteren alternativen vorteilhaften Ausgestaltungsform einer solchen Fördereinheit ist der Traghaken derart ausgestaltet, dass in einer bestimmten ersten räumlichen Orientierung des Traghakens der Aufhängehaken auf dem ersten Lagerungssegment die erste stabile Position einnehmen kann, in der sich der Aufhängehaken in der ersten Ebene ausrichtet; und in einer von der bestimmten ersten räumlichen Orientierung verschiedenen zweiten räumlichen Orientierung des Traghakens der Aufhängehaken sowohl auf dem ersten Lagerungssegment die erste stabile Position einnehmen kann, in der sich der Aufhängehaken in der ersten Ebene ausrichtet, als auch auf dem zweiten Lagerungssegment die zweite stabile Position einnehmen kann, in der sich der Aufhängehaken in der zweiten Ebene ausrichtet; wobei in der bestimmten ersten räumlichen Orientierung des Traghakens die erste Position einem Minimum der potentiellen Energie des hängend gelagerten Transportelements entspricht, und wobei in der zweiten räumlichen Orientierung die erste Position und die zweite Position lokalen Minima der potentiellen Energie des hängend gelagerten Transportelements entsprechen; und wobei der Aufhängehaken durch Drehen des Aufhängehakens um einen bestimmten Drehwinkel zwischen der ersten stabilen Position und der zweiten stabilen Position hin und her überführbar ist.

Der Drehwinkel der Traghakens beträgt vorteilhaft zwischen 0 und 180°, noch vorteilhafter zwischen 30° und 120°, und besonders vorteilhaft zwischen 45° und 90°.

Besonders vorteilhaft ist dabei der Aufhängehaken durch Drehen des Förderelements um die Förderrichtung von der zweiten Position in die erste Position überführbar.

Bei den vorgenannten Fördereinheiten ist das Transportelement vorteilhaft ein Behälter mit mindestens einer stabilen Wand.

Das Transportelement einer Fördereinheit kann eine Transporttasche sein.

Alternativ können die Transportelemente auch anders ausgestaltet sein, beispielsweise als Transportkisten oder Transportschüsseln, als flexible Transportbeutel, oder als Leichtbaugestänge mit dazwischen gespannten textilen Wandungen, etc.

Besonders vorteilhaft umfasst eine solche Transporttasche einer Fördereinheit eine Rückwand und eine Vorderwand, die über einen Bodenabschnitt derart flexibel miteinander verbunden sind, dass sie zwischen einem ersten Zustand, in welcher sie eine oben offene und von oben befüllbare Tasche bilden, und einem zweiten Zustand, in welcher sie dicht nebeneinander liegen und eine zusammengefaltete Tasche bilden, hin und her bewegbar sind, wobei die Rückwand nach oben über die Höhe der Vorderwand hinaus mit einem Tragabschnitt zum Befestigen der Transporttasche am Förderelement verlängert ist, und wobei der Aufhängehaken an einem oberen Ende des Tragabschnitts angebracht ist.

Zusätzlich kann die Transporttasche Öffnungsmittel aufweisen, welche die Transporttasche selbsttätig in den ersten Zustand bringen und dort halten können.

In einer anderen vorteilhaften Fördereinheit ist zwischen der Vorderwand und der Rückwand der Transporttasche mindestens ein Distanzhalterelement angeordnet und jeweils mit der Vorderwand und der Rückwand schwenkbar verbunden, wobei das mindestens ein Distanzhalterelement derart ausgestaltet und angeordnet ist, dass bei leerer Tasche die Transporttasche durch die Schwerkraft selbsttätig vom ersten Zustand in den zweiten Zustand gelangt.

Besonders vorteilhaft kann durch Anheben der Vorderwand die Transporttasche vom zweiten Zustand in den ersten Zustand gebracht werden.

Zwischen der Vorderwand und der Rückwand der Transporttasche ist vorteilhaft an einem unteren Ende der Vorderwand und an einem oberen Ende der Vorderwand jeweils auf beiden Seiten ein Distanzhalterelement angeordnet und jeweils mit der Vorderwand und der Rückwand schwenkbar verbunden. Eine solche Ausgestaltung erlaubt es beispielsweise, den Bodenabschnitt einer Fördereinheit flexibel auszugestalten.

Vorteilhaft weisen die Distanzhalterelemente einen vom Tascheninneren weg gerichteten Knick auf. Eine solche geknickte Ausgestaltung erhöht beispielsweise die nutzbare Öffnung der Tasche. Auch erhöht sich die mechanische Stabilität.

Vorteilhaft weist ein Transportelement einer erfindungsgemässen Fördereinheit an einer Rückwand mindestens einen Anschlagbügel auf, welcher ein Schwenken eines Distanzhalterelementes über die durch die Rückwand gebildete Ebene hinaus auf die von der Vorderwand abgewandten Seite der Rückwand hin verhindert oder erschwert.

Vorteilhaft weist das Transportelement mindestens einen zweiten Haken auf.

Alternativ kann das Transportelement einer erfindungsgemässen Fördereinheit ein Kleiderbügel sein, insbesondere ein Hänger-Kleiderbügel oder ein Klemmbügel.

Alternativ kann das Transportelement einer erfindungsgemässen Fördereinheit auch eine Vorrichtung zum Halten von zwei oder mehr Behältern sein.

Solche leeren oder gefüllten Behälter können beispielsweise Flüssigkeitsbehälter wie Flaschen sein, Druckbehälter für Gase, Behälter für Aerosolspraydosen oder Konservendosen. Die genannten Behälter umfassen jedoch auch jede andere Art von Behältnissen und Verpackungen für fluide oder feste Stoffe, wie beispielsweise Beutel, Säcke oder Kartons, aber auch ganz allgemein alle Arten von einzelnen Gegenständen und Produkten, die auf irgendeine Art mechanisch greifbar sind. Die Behälter können je nach Anwendung aus Glas, Metall, Papier, Karton oder Polymermaterial, etc. gefertigt sein. So können beispielsweise befüllte und verschlossene Weinflaschen befördert werden, Halbfabrikate für die Herstellung von Spraydosen, oder Kartoffelchips-Beutel, Zigarettenstangen, Säcke mit Schüttgut etc.

Solche erfindungsgemässen Transportvorrichtungen eignen sich somit ganz allgemein für die Intralogistik in einer Herstellungskette und/oder Lagerverwaltung und/oder Kundenversand. Insbesondere erlauben solche Transportvorrichtungen das flexible Koppeln nacheinander folgender Bearbeitungsprozesse in einer Produktionskette. Weist beispielsweise eine Vorrichtung zur Verpackung von Waren eine andere Verarbeitungskapazität auf als eine vorgeschaltete Vorrichtung zur Herstellung der Waren, so kann mit einer solchen Transportvorrichtung ein Puffer geschaffen werden. Ebenso können vorübergehende Produktionsstopps während Wartungsarbeiten oder Umrüstarbeiten einzelner Anlageteile aufgefangen werden. Der individuelle Transport der Fördereinheiten erlaubt zudem die individuelle Bearbeitung kleinerer Losgrössen.

Ein erfindungsgemässes Fördersystem zum geführten hängenden Transport von Transportelementen, insbesondere Transporttaschen und/oder Kleiderbügel-Elementen, entlang eines Förderwegs, insbesondere ein schienengeführtes Fördersystem oder ein Förderkettensystem, umfasst mindestens eine der oben genannten vorteilhaften Fördereinheiten.

Vorteilhaft steht bei einem solchen Fördersystem die erste Ebene, in welcher sich der Aufhängehaken in der ersten stabilen Position ausrichtet, im Wesentlichen quer zur Förderrichtung; und die zweite Ebene, in welcher sich der Aufhängehaken in der zweiten stabilen Position ausrichtet, steht im Wesentlichen parallel zur Förderrichtung.

Beim Fördersystem ist vorteilhaft eine Wirkanordnung vorgesehen, mit welcher die Transportelemente an einer bestimmten Stelle des Förderwegs um einen bestimmten Drehwinkel gedreht werden können, so dass der Aufhängehaken von der ersten Position in die zweite Position beziehungsweise von der zweiten Position in die erste Position überführt wird.

Dabei erfolgt vorteilhaft die Umlagerung der Transportelemente, beispielsweise Transporttaschen und Kleiderbügel-Elemente, durch das Drehen der Transportelemente selber, vorteilhaft um eine Mittelachse.

Besonders vorteilhaft sind als Wirkanordnung eine Bürstenanordnung oder mechanische, elektrische, magnetische oder pneumatische Betätigungsmittel vorgesehen.

Alternativ ist bei einem vorteilhaften Fördersystem in einem bestimmten einen Abschnitt des Förderwegs der Traghaken der Fördereinheit derart ausgerichtet, dass der Aufhängehaken des Transportelements eine erste stabile Position einnimmt, und ist in einem bestimmten anderen Abschnitt der Traghaken der Fördereinheit derart ausgerichtet, dass der Aufhängehaken des Transportelements eine zweite stabile Position einnimmt.

Besonders vorteilhaft wird dabei ein Überführen des Aufhängehakens von der ersten stabilen Position in die zweite stabile Position beziehungsweise von der zweiten stabilen Position in die erste stabile Position durch die Drehung des Förderelements um die Förderrichtung beim Übergang zwischen dem bestimmten einen Abschnitt und dem bestimmten anderen Abschnitt des Förderwegs initiiert.

Bei den obengenannten Fördersystemen mit Transporttaschen können weiter Öffnungsmittel vorgesehen sein, mit welchen eine Transporttasche an einer bestimmten Stelle des Förderwegs in den ersten geöffneten Zustand gebracht werden kann, wobei sich dabei der Aufhängehaken in der zweiten Position befindet und die Rückwand der Transporttasche im Wesentlichen parallel zur Förderrichtung orientiert ist.

Besonders vorteilhaft ist dabei als Öffnungsmittel eine Hebeanordnung vorgesehen, insbesondere ein Hebetisch oder eine Rampenanordnung.

Das Öffnungsmittel kann auch als Rampe ausgestaltet sein, die so angeordnet ist, dass der Bodenabschnitt einer leeren Tasche bei der Förderung von der Rampe kontinuierlich angehoben wird, so dass die Transporttasche in den ersten, geöffneten Zustand übergeht.

In einer anderen vorteilhaften Ausführungsform eines solchen Fördersystems ist als Öffnungsmittel eine Öffnungsvorrichtung vorgesehen, umfassend eine Mehrzahl von gestaffelt angeordneten Förder- und Hebevorrichtungen mit einem unteren Rollenelement, so dass die unteren Rollenelemente der Öffnungsvorrichtung eine ansteigende Rampe bilden.

Die genannte Rollenrampe erlaubt es, beim Fördern einer leeren Transporttasche entlang des Förderpfads die untere Kante der Vorderwand anzuheben, so dass die Vorderwand als Ganzes angehoben wird und sich aufgrund der geometrisch vorgegebenen Wirkverbindung über Distanzhalterelemente und/oder Bodenabschnitt von der Rückwand wegbewegt, so dass sich die Öffnung der Tasche öffnet. In diese kann nun die Ladung, beispielsweise eine Stückguteinheit, eingebracht werden.

Besonders vorteilhaft weisen die Förder- und Hebevorrichtungen ein oberes Rollenelement auf, so dass die unteren Rollenelemente und die oberen Rollenelemente der Öffnungsvorrichtung einen Förderkanal ausbilden.

Eine solche Ausführungsform bietet den Vorteil, dass die unteren Rollen zum einen die Vorderwand anheben können, und zum anderen zusammen mit den oberen Rollen einen Führungskanal für die Transporttaschen bilden, in welchem die Transporttaschen der Fördereinheiten zuverlässig einen reproduzierbaren Pfad einschlagen. Die oberen Rollen bilden dabei einen Anschlag für die Vorderwand oder die Rückwand, je nachdem wie die Transporttaschen in Bezug auf die Förder- und Hebeeinheiten orientiert sind, so dass die transversale Bewegung in Richtung der oberen Rollen begrenzt ist.

Zusätzlich oder alternativ können die unteren Rollenelemente und/oder die oberen Rollenelemente der Förder- und Hebeeinheiten aktiv angetrieben sein. Ein solcher aktiver Antrieb vermeidet oder reduziert eine unerwünschte Bremswirkung der Öffnungsvorrichtung auf die darin geförderten Transporttaschen der Fördereinheiten.

Vorteilhaft ist die Drehrichtung und die Drehgeschwindigkeit der Rollenelemente so auf die Fördergeschwindigkeit am Ort der entsprechenden Rollenelemente abgestimmt, dass die tangentiale Umfanggeschwindigkeit der Rollenelemente der longitudinalen Fördergeschwindigkeit entspricht. Dies bedeutet, dass die Transporttasche einer Fördereinheit von den Rollen gleich schnell und in gleicher Richtung wie der Laufwagen der Fördereinheit gefördert werden. Entsprechend ist ein Schwingen der Transporttaschen in longitudinaler Richtung nicht möglich, und die Lage der Tasche auch bei hohen Fördergeschwindigkeiten oder positiven und negativen Beschleunigungen stabilisiert.

Die unteren Rollenelemente und die oberen Rollenelemente der Förder- und Hebeeinheiten sind vorteilhaft in einem Winkel zwischen 75° und 105° zueinander angeordnet, sowie senkrecht zur Förderrichtung angeordnet. Besonders vorteilhaft sind die unteren Rollenelemente und die oberen Rollenelemente rechtwinklig zueinander angeordnet. In einer besonders vorteilhaften Ausführungsform sind dabei die unteren Rollenelemente gegenüber der Waagrechten um einen Winkel zwischen 5° und 30° geneigt.

Eine solche Ausführungsform bietet den Vorteil, dass transversaler zur Förderrichtung in einer Richtung die oberen Rollen die Bewegung der Transporttasche begrenzen, und in der anderen Richtung die leicht geneigten unteren Rollen. Die Transporttaschen der Fördereinheiten schlagen zuverlässig einen reproduzierbaren Pfad ein.

Eine weitere Möglichkeit ist die Verwendung eines rampenförmigen Förderbands, das analog zur oben genannten Rampe verläuft, jedoch den Vorteil hat, dass die Transporttasche an ihrem unteren Ende aktiv mitbewegt wird, so dass die Öffnung der Tasche sehr kontrolliert erfolgen kann.

In einem vorteilhaften Fördersystem kann das Öffnungsmittel also einen rampenförmig angeordneten unteren Bandförderer umfassen. Dieser untere Bandförderer hebt analog zu den obenstehend diskutierten unteren Rollenelementen die Vorderwand der Transporttaschen an.

Die genannte Bandfördererrampe erlaubt es, beim Fördern einer leeren Transporttasche entlang des Förderpfads die untere Kante der Vorderwand anzuheben, so dass die Vorderwand als Ganzes angehoben wird und sich aufgrund der geometrisch vorgegebenen Wirkverbindung über Distanzhalterelemente und/oder Bodenabschnitt von der Rückwand wegbewegt, so dass sich die Öffnung der Tasche öffnet. In diese kann nun die Ladung, beispielsweise eine Stückguteinheit, eingeworfen werden.

Besonders vorteilhaft umfasst ein solches Öffnungsmittel weiter einen oberen Bandförderer, so dass der untere Bandförderer und der obere Bandförderer einen Förderkanal ausbilden.

Eine solche Ausführungsform bietet den Vorteil, dass der untere Bandförderer zum einen die Vorderwand anheben kann, und zum anderen zusammen mit dem oberen Bandförderer einen Führungskanal für die Transporttaschen bildet, in welchem die Transporttaschen der Fördereinheiten zuverlässig einen reproduzierbaren Pfad einschlagen. Der obere Bandförderer bildet dabei einen Anschlag für die Vorderwand oder die Rückwand, je nachdem wie die Transporttaschen in Bezug auf Bandförderer orientiert sind, so dass die transversale Bewegung in Richtung des oberen Bandförderers begrenzt ist.

Zusätzlich oder alternativ können der untere Bandförderer und/oder der obere Bandförderer aktiv angetrieben sein. Ein solcher aktiver Antrieb vermeidet oder reduziert eine unerwünschte Bremswirkung der Öffnungsvorrichtung auf die darin geförderten Transporttaschen der Fördereinheiten.

Vorteilhaft ist die Förderrichtung und die Fördergeschwindigkeit der Bandförderer gleich wie die longitudinale Fördergeschwindigkeit der Fördereinheiten. Dies bedeutet, dass die Transporttasche einer Fördereinheit von Bandförderern gleich schnell und in gleicher Richtung wie der Laufwagen der Fördereinheit gefördert werden. Entsprechend ist ein Schwingen der Transporttaschen in longitudinaler Richtung nicht möglich, und die Lage der Tasche auch bei hohen Fördergeschwindigkeiten oder positiven und negativen Beschleunigungen stabilisiert. Ist die Fördergeschwindigkeit an verschiedenen Stellen des Förderpfads unterschiedlich, so können auch mehrere Bandförderer gestaffelt hintereinander angeordnet werden, welche diesen unterschiedlichen Geschwindigkeiten Rechnung tragen können.

Der untere Bandförderer und der obere Bandförderer sind vorteilhaft in einem Winkel zwischen 75° und 105° zueinander angeordnet. Besonders vorteilhaft sind der untere Bandförderer und der obere Bandförderer rechtwinklig zueinander angeordnet. In einer besonders vorteilhaften Ausführungsform ist dabei der untere Bandförderer gegenüber derWaagrechten um einen Winkel zwischen 5° und 30° geneigt.

Eine solche Ausführungsform bietet den Vorteil, dass transversaler zur Förderrichtung in einer Richtung der obere Bandförderer die Bewegung der Transporttasche begrenzt, und in der anderen Richtung der leicht geneigte untere Bandförderer. Die Transporttaschen der Fördereinheiten schlagen zuverlässig einen reproduzierbaren Pfad ein.

In einer Öffnungsvorrichtung für ein erfindungsgemässes Fördersystem können die obengenannten Förder- und Hebeeinheiten und Bandförderer auch kombiniert werden.

Weiter können die vorgenannten Fördersysteme eine Vorrichtung zum Einbringen von Stückguteinheiten in die geöffnete Tasche der Transporttasche aufweisen.

In einem Bereitstellungsabschnitt des Förderwegs des Fördersystems können eine Mehrzahl von Transporttaschen in geschuppter Anordnung bereitgestellt werden.

Die Traghaken der Fördereinheiten sind vorteilhaft so ausgestaltet, dass sie eine solche geschuppte Anordnung zulassen. Vorteilhaft weisen die Traghaken ein Lagerungssegment auf, welches in der geschuppten Anordnung der Transporttaschen eine stabile Position der Aufhängehaken ermöglichen.

Solche geschuppten Anordnungen von Transporttaschen können überall in einem Fördersystem eingesetzt werden. Sie können für verschiedene Anwendungen und zur Erfüllung verschiedener Funktionen innerhalb eines Fördersystems eingesetzt werden.

Es ist auch möglich, ganze Gruppen solcher Transporttaschen in geschuppter Anordnung zusammen innerhalb des Fördersystems zu fördern und zu verschieben.

In einem anderen erfindungsgemässen Fördersystem gemäß Anspruch 14 zum geführten hängenden Transport von Transporttaschen entlang eines Förderwegs, insbesondere ein schienengeführtes Fördersystem oder ein Förderkettensystem, ist das Fördersystem derart ausgestaltet, dass auf einem bestimmten Abschnitt des Förderwegs eine Mehrzahl von Transporttaschen in geschuppter Anordnung bereitgestellt werden können.

Die Traghaken der Fördereinheiten sind wiederum vorteilhaft so ausgestaltet, dass sie eine solche geschuppte Anordnung zulassen. Vorteilhaft weisen die Traghaken ein Lagerungssegment auf, welches in der geschuppten Anordnung der Transporttaschen eine stabile Position der Aufhängehaken ermöglichen.

Die genannten geschuppten Anordnungen von Transporttaschen können überall im Fördersystem eingesetzt werden. Sie können für verschiedene Anwendungen und zur Erfüllung verschiedener Funktionen innerhalb eines Fördersystems eingesetzt werden.

Ganze Gruppen solcher Transporttaschen in geschuppter Anordnung können zusammen innerhalb des Fördersystems gefördert und verschoben werden.

Ein erfindungsgemässes Verfahren zum Einbringen von Stückgut in Transportelemente eines Fördersystems umfasst die Schritte:
- Bereitstellen eines erfindungsgemässen Fördersystems wie obenstehend diskutiert;
- Zuführen einer Fördereinheit des Fördersystems entlang des Förderwegs, wobei der Aufhängehaken des Transportelements sich in der ersten stabilen Position befindet;
- Überführen des Aufhängehakens des Transportelements der genannten Fördereinheit von der ersten stabilen Position in die zweite stabile Position;
- Einbringen mindestens einer Stückguteinheit in das aufnahmebereite Transportelement der genannten Fördereinheit; und
- Überführen des Aufhängehakens des genannten Transportelements von der zweiten stabilen Position in die erste stabile Position.

Bei einem solchen Verfahren sind vorteilhaft die Fördereinheiten des Fördersystems eine der oben diskutierten erfindungsgemässen Fördereinheiten mit einer Transporttasche; wobei in der ersten Position des Aufhängehakens die Rückwand der Transporttasche im Wesentlichen quer zur Förderrichtung orientiert ist; und wobei in der zweiten Position des Aufhängehakens die Rückwand der Transporttasche im Wesentlichen parallel zur Förderrichtung orientiert ist. Besonders vorteilhaft wird bei einem der vorgenannten Verfahren vor dem Einbringen einer Stückguteinheit in die Tasche der Transporttasche einer Fördereinheit die Transporttasche vom zweiten Zustand in den ersten Zustand überführt.

Bei den oben genannten Verfahren wird vorteilhaft eine Mehrzahl von Transporttaschen in geschuppter Anordnung bereitgestellt.

Ein erfindungsgemässes Verfahren zur visuellen Inspektion von auf Kleiderbügel-Transportelementen eines Fördersystems aufgehängten Kleidungstücken oder in Behälter-Haltevorrichtungen eines Fördersystems gehaltenen Behältern umfasst die Schritte:
- Bereitstellen eines erfindungsgemässen Fördersystems wie obenstehend diskutiert;
- Zuführen einer Fördereinheit des Fördersystems entlang des Förderwegs, wobei der Aufhängehaken des Kleiderbügel-Transportelements beziehungsweise des Behälter-Haltevorrichtungs-Transportelements sich in der ersten stabilen Position befindet;
- Überführen des Aufhängehakens des Kleiderbügel-Transportelements beziehungsweise des Behälter-Haltevorrichtungs-Transportelements der genannten Fördereinheit von der ersten stabilen Position in die zweite stabile Position;
- visuelle Inspektion der Vorderseite und/oder Rückseite eines auf dem Kleiderbügel-Transportelement aufgehängten Kleidungstücks beziehungsweise eines in der Behälter-Haltevorrichtung des Transportelements gehaltenen Behälters; und
- Überführen des Aufhängehakens des Kleiderbügel-Transportelements beziehungsweise des Behälter-Haltevorrichtungs-Transportelements von der zweiten stabilen Position in die erste stabile Position.

Als visuelle Inspektion ist im Zusammenhang mit dieser Offenbarung allgemein jede Bilderfassung direkt mit dem Auge und/oder mit optischen Hilfsmitteln (Kameras etc.) gemeint, mit anschliessender Auswertung durch den Menschen und/oder durch automatische Systeme.

Die genannte visuelle Inspektion kann für verschiedene Anwendungen vorteilhaft sein. Beispielsweise kann die Art retournierter leerer Kleiderbügel bestimmt werden, um so eine Sortierung zu ermöglichen, oder es kann die Art oder Zustand eines auf einem Kleiderbügel aufgehängten Kleidungsstücks festgestellt oder überprüft werden. Ebenso kann die Art oder der Zustand der Behälter festgestellt oder überprüft werden, beispielsweise in einem Produktionsprozess oder einem Logistikprozess.

Beim oben genannten Verfahren sind vorteilhaft die Fördereinheiten des Fördersystems Fördereinheiten mit Kleiderbügel-Transportelementen beziehungsweise Behälter-Haltevorrichtungs-Transportelementen; wobei in der ersten Position des Aufhängehakens das Kleiderbügel-Transportelement beziehungsweise das Behälter-Haltevorrichtungs-Transportelement im Wesentlichen quer zur Förderrichtung orientiert ist; und wobei in der zweiten Position des Aufhängehakens das Kleiderbügel-Transportelement beziehungsweise das Behälter-Haltevorrichtungs-Transportelement im Wesentlichen parallel zur Förderrichtung orientiert ist.

Besonders vorteilhaft wird bei einem der vorgenannten Verfahren vor der visuellen Inspektion der Vorderseite und/oder Rückseite eines auf dem Kleiderbügel-Transportelement aufgehängten Kleidungstücks das Kleiderbügel-Transportelement vom zweiten Zustand in den ersten Zustand überführt, beziehungsweise wird vor der visuellen Inspektion der Vorderseite und/oder Rückseite eines auf dem Behälter-Haltevorrichtungs-Transportelement gehaltenen Behälters das Behälter-Haltevorrichtungs-Transportelement vom zweiten Zustand in den ersten Zustand überführt.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands.

In den Figuren und der dazugehörigen Beschreibung sind gleiche oder gleich wirkende Teile mit den gleichen Bezugszeichen versehen.

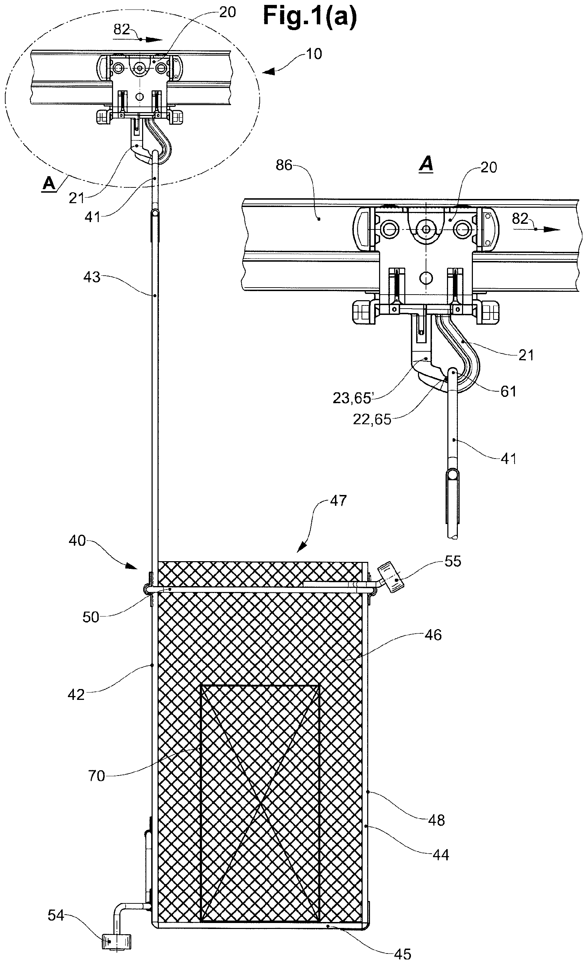

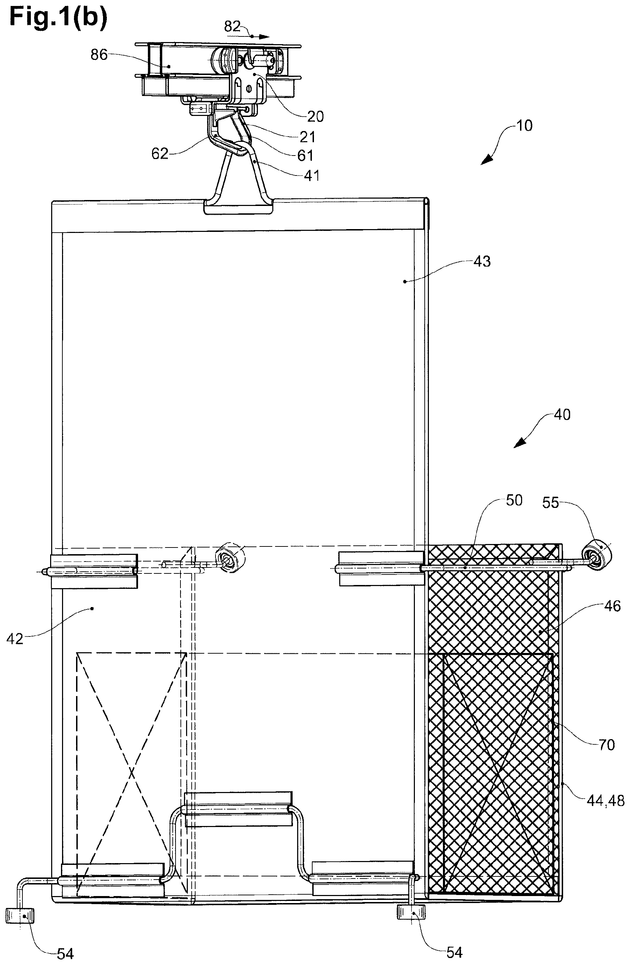

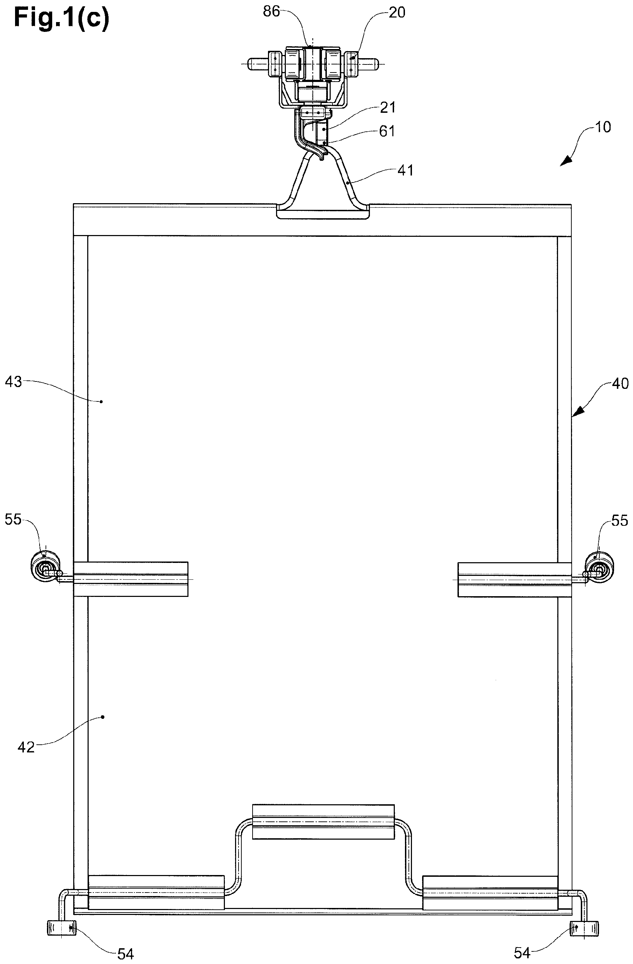

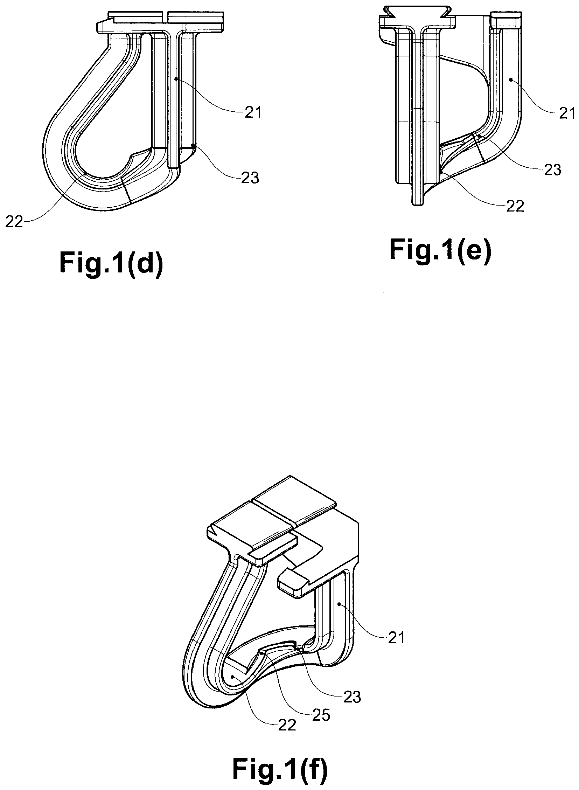

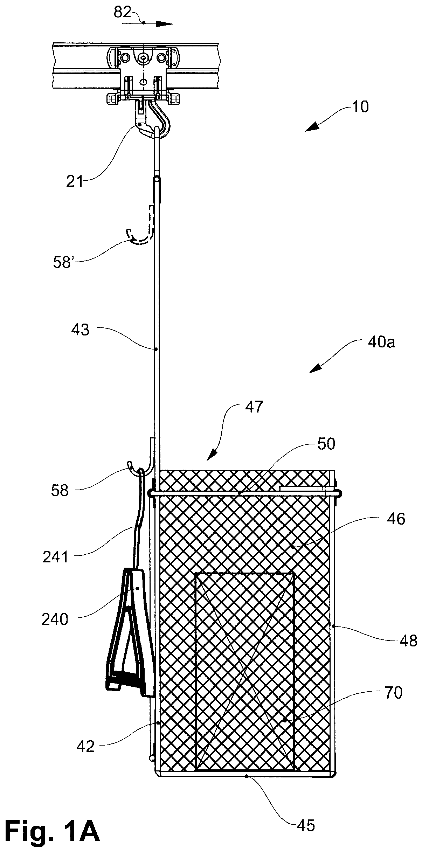

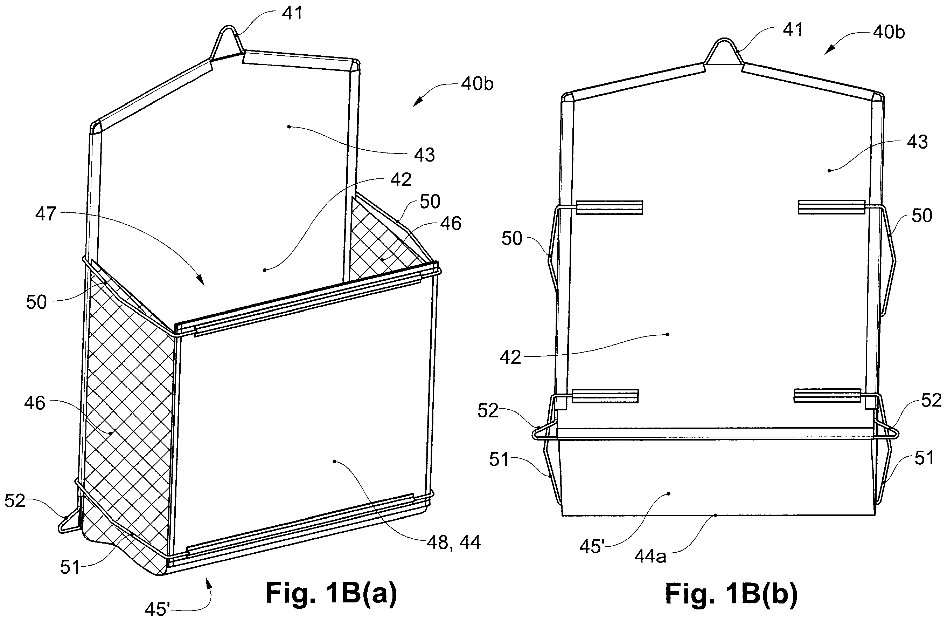

- Figur 1: zeigt schematisch eine erste mögliche Ausführungsform einer erfindungsgemässen Fördereinheit, in einer ersten stabilen Position mit dem Aufhängehaken im Wesentlichen quer zur Förderrichtung, (a) in einer Seitenansicht mit Förderrichtung nach rechts und einem Detail im Bereich der Kupplung der beiden Haken; (b) in einer Ansicht von schräg hinten; (c) in einer Rückansicht mit Blick in Förderrichtung, und (d), (e), (f) in verschiedenen perspektivischen Ansichten des Traghakens.
- Figur 1A: zeigt schematisch die Fördereinheit aus Figur 1, mit einer alternativen Ausgestaltungsform eines Transportelements als Transporttasche mit zusätzlichem Mittel zum Transport von Kleidungsstücken auf Kleiderbügeln, in einer ersten stabilen Position mit dem Aufhängehaken im Wesentlichen quer zur Förderrichtung, in einer Seitenansicht mit Förderrichtung nach rechts.
- Figur 1B: zeigt schematisch eine andere Ausführungsform eines Transportelements in Form einer Transporttasche, wie es in einer erfindungsgemässen Fördereinheit verwendetwerden kann; (a) in einer perspektivischen Ansicht in der geöffneten Konfiguration, und (b) in einer Rückansicht mit Blick in Förderrichtung in der geschlossenen, zusammengefalteten Konfiguration.

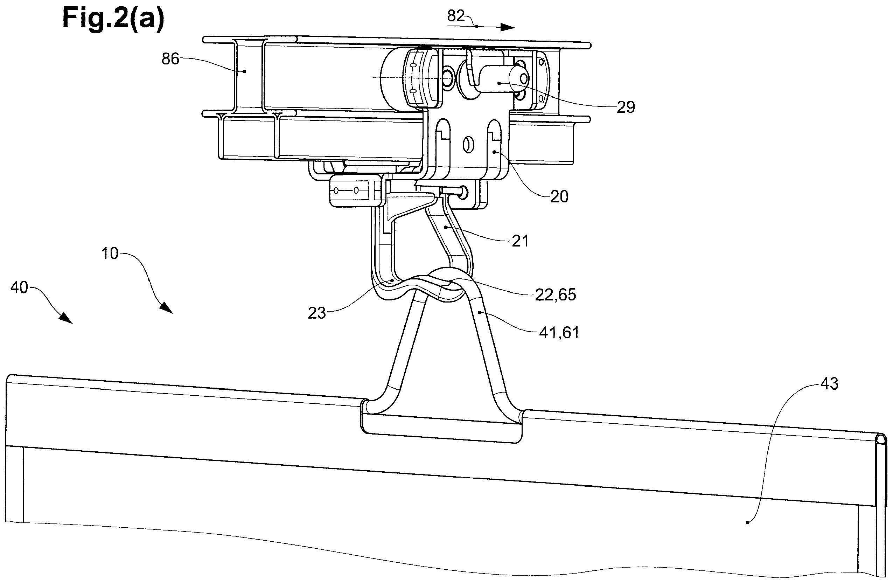

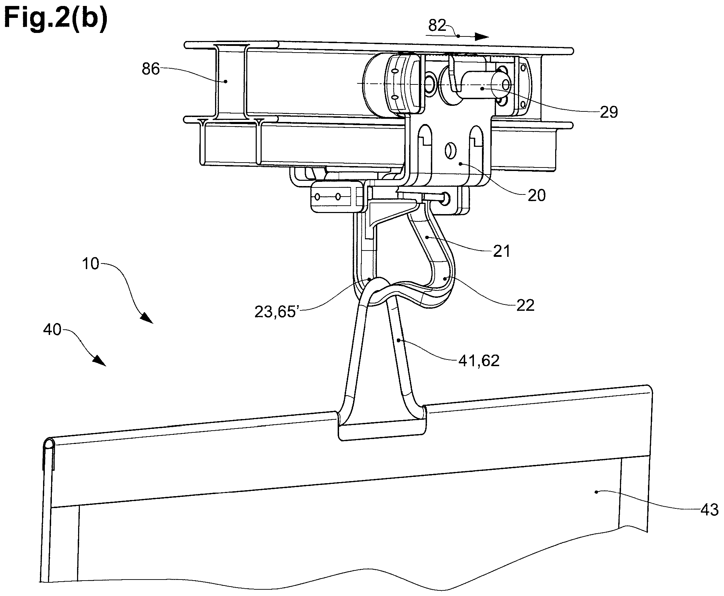

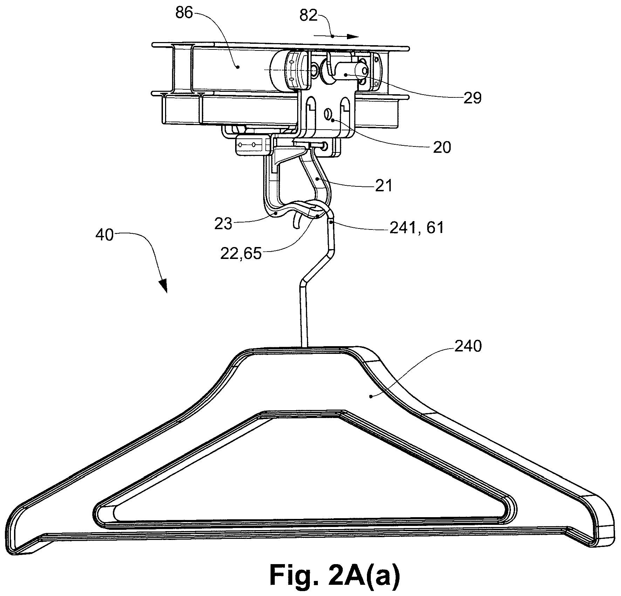

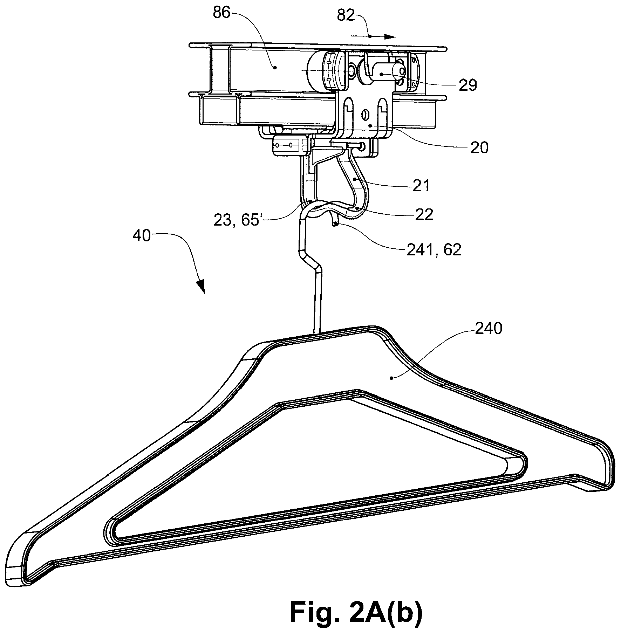

- Figur 2: zeigt schematisch eine zweite mögliche Ausführungsform einer erfindungsgemässen Fördereinheit, in einer Detailansicht des im Traghaken gelagerten Aufhängehakens, (a) mit dem Aufhängehaken in einer ersten stabilen Position im Wesentlichen quer Förderrichtung; und (b) mit dem Aufhängehaken in einerzweiten stabilen Position mit dem Aufhängehaken im Wesentlichen parallel zur Förderrichtung.
- Figur 2A: zeigt schematisch die Ausführungsform einer erfindungsgemässen Fördereinheit aus Figur 2, mit einem im Traghaken gelagerten Kleiderbügelelement, (a) mit dem Aufhängehaken in einer ersten stabilen Position im Wesentlichen quer zur Förderrichtung; und (b) mit dem Aufhängehaken in einer zweiten stabilen Position mit dem Aufhängehaken im Wesentlichen parallel zur Förderrichtung.

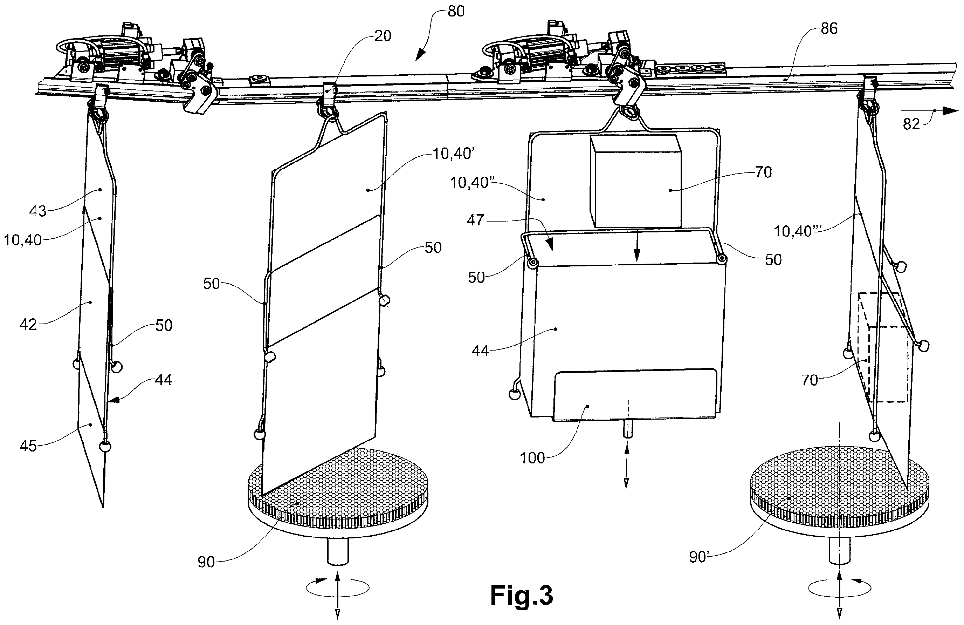

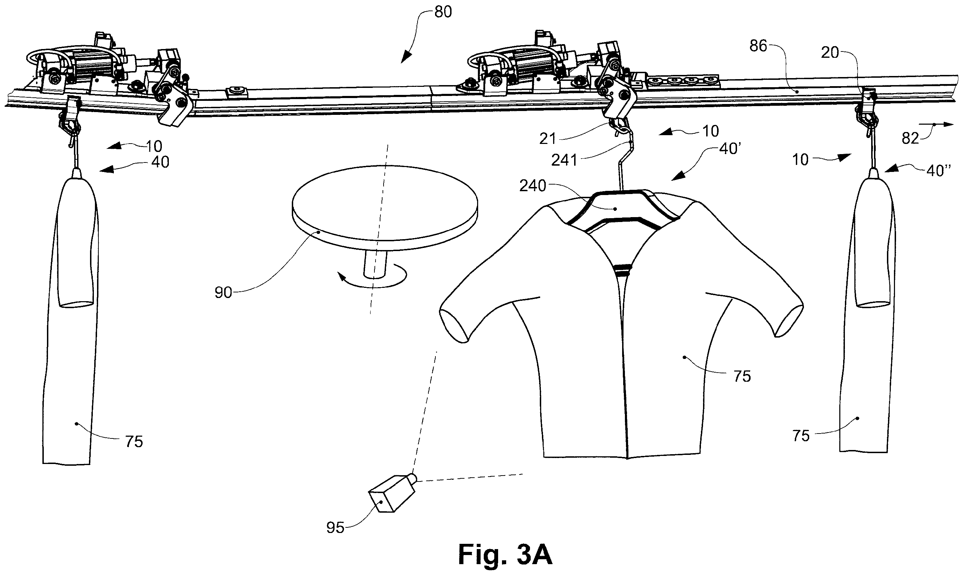

- Figur 3: zeigt schematisch eine mögliche Ausführungsform eines erfindungsgemässen Fördersystems, mit Fördereinheiten wie in Figur 1 gezeigt, zwei Wirkvorrichtungen zum Drehen eines Transportelements zwischen zwei stabilen Positionen, und einem dazwischen angeordneten Öffnungsmittel.
- Figur 3A: zeigt schematisch eine andere mögliche Ausführungsform eines erfindungsgemässen Fördersystems, mit Fördereinheiten wie in Figur 2A gezeigt.

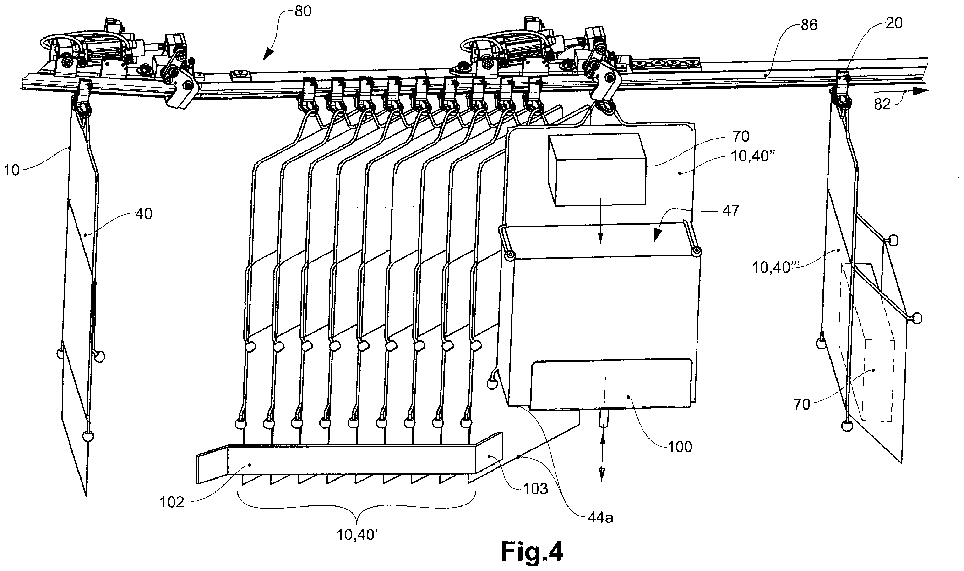

- Figur 4: zeigt schematisch eine weitere mögliche Ausführungsform eines erfindungsgemässen Fördersystems, in welchem stromaufwärts zum Öffnungsmittel eine Mehrzahl von ungefüllten Transportelementen in geschuppter Anordnung bereitgestellt wird.

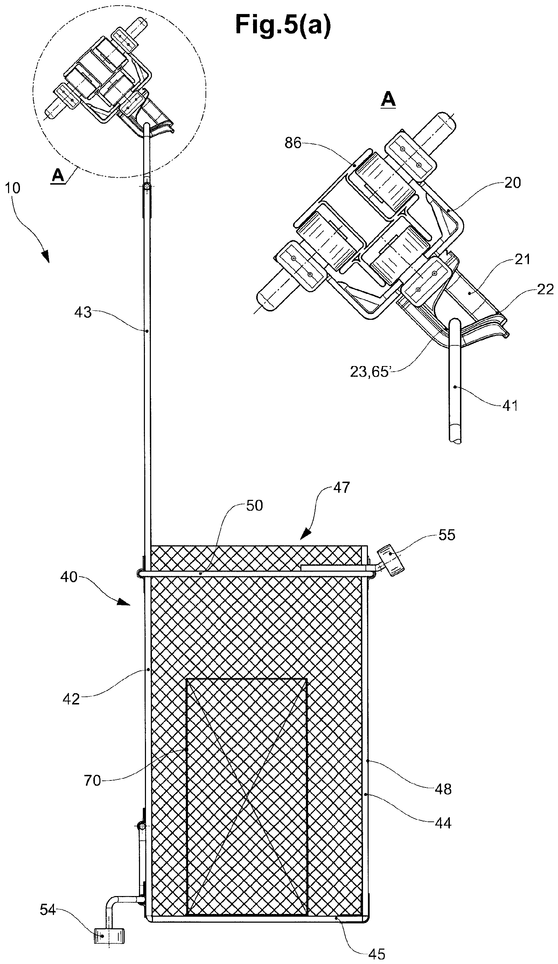

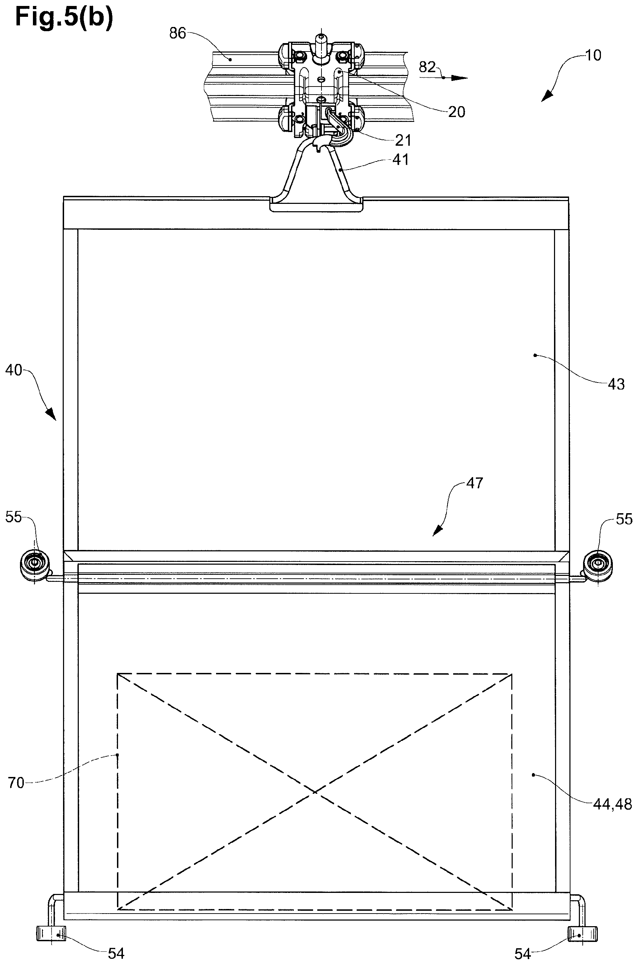

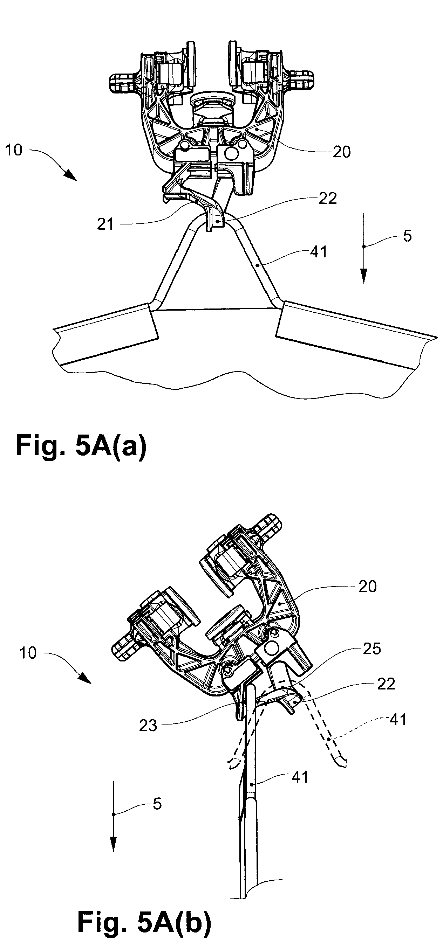

- Figur 5: zeigt schematisch eine dritte mögliche Ausführungsform einer erfindungsgemässen Fördereinheit, in einer zweiten stabilen Position mit dem Aufhängehaken im Wesentlichen parallel zur Förderrichtung, (a) in einer Seitenansicht auf das Transportelement mit Blick in Förderrichtung, und einem Detail A im Bereich der Kupplung der beiden Haken; und (b) in einer Vorderansicht.
- Figur 5A: zeigt schematisch noch eine weitere mögliche Ausführungsform einer erfindungsgemässen Fördereinheit, in einer Detailansicht auf Anhängehaken und Traghaken, (a) mit dem Traghaken in einer ersten Ausrichtung in Bezug zur Senkrechten und dem Aufhängehaken einer Transporttasche in der einzigen stabilen Position, und (b) mit dem Traghaken in einer zweiten Ausrichtung in Bezug zur Senkrechten und dem Aufhängehaken in einer zweiten von zwei möglichen stabilen Positionen.

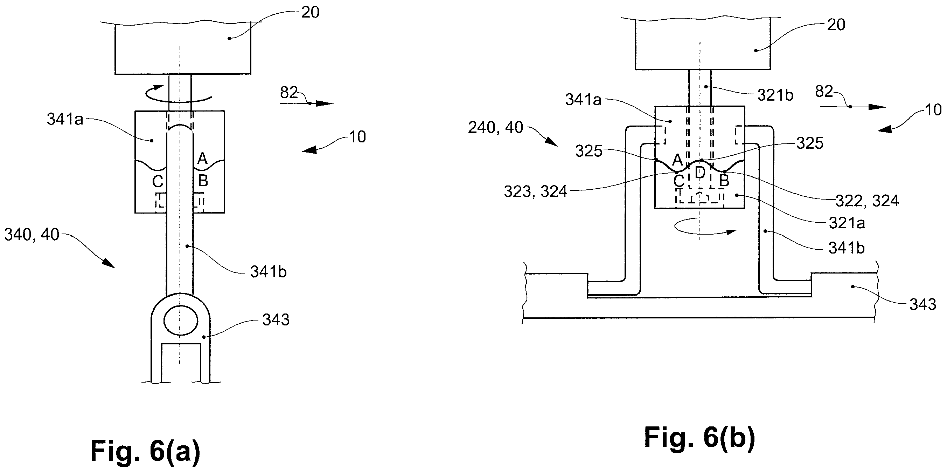

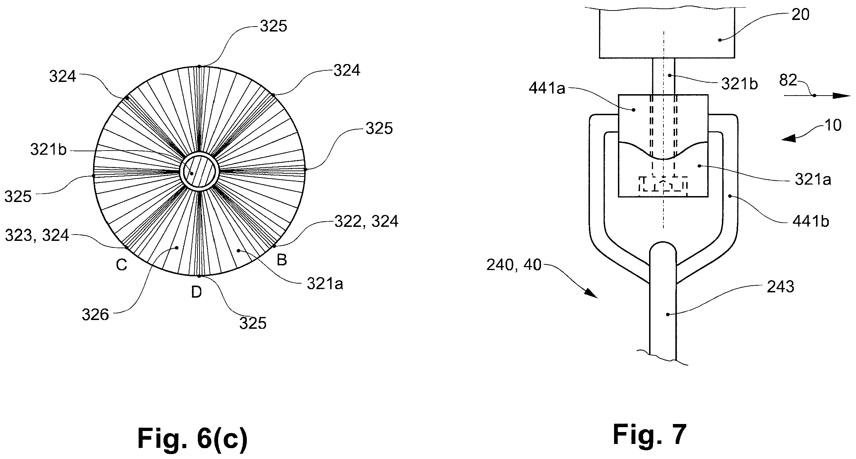

- Figur 6: zeigt schematisch eine vierte mögliche Ausführungsform einer erfindungsgemässen Fördereinheit in einer Detailansicht des im Traghaken gelagerten Aufhängehakens, (a) mit dem Aufhängehaken in einer ersten stabilen Position, in welcher der Tragabschnitt der Transporttasche im Wesentlichen quer zur Förderrichtung verläuft; (b) mit dem Aufhängehaken in einer zweiten stabilen Position, in welcher der Tragabschnitt der Transporttasche im Wesentlichen parallel zur Förderrichtung verläuft; und (c) in einer Aufsicht auf die Lagerfläche des Traghakens.
- Figur 7: zeigt schematisch eine fünfte mögliche Ausführungsform einer erfindungsgemässen Fördereinheit in einer Detailansicht, mit dem Aufhängehaken in einer ersten stabilen Position, in welcher ein Kleiderbügel im Wesentlichen quer zur Förderrichtung verläuft.

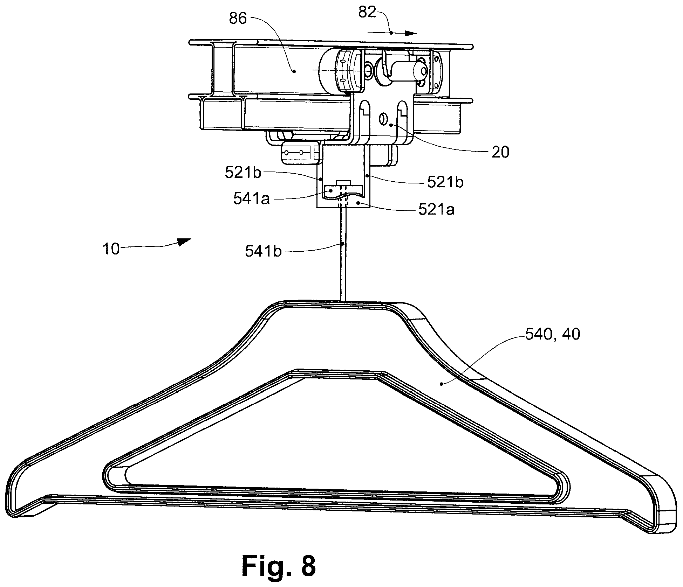

- Figur 8: zeigt schematisch eine sechste mögliche Ausführungsform einer erfindungsgemässen Fördereinheit, mit einem im Traghaken gelagerten Kleiderbügelelement, mit dem Aufhängehaken in einer ersten stabilen Position, in welcher der Kleiderbügel im Wesentlichen quer Förderrichtung steht.

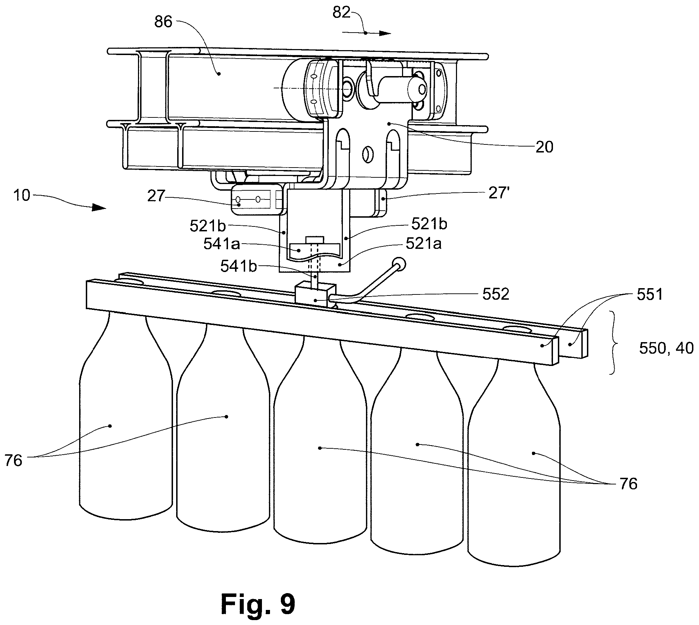

- Figur 9: zeigt schematisch eine siebte mögliche Ausführungsform einer erfindungsgemässen Fördereinheit, mit einem im Traghaken gelagerten Haltevorrichtung für mehrere Behälter, mit dem Aufhängehaken in einer ersten stabilen Position, in welcher die Haltevorrichtung im Wesentlichen quer Förderrichtung steht.

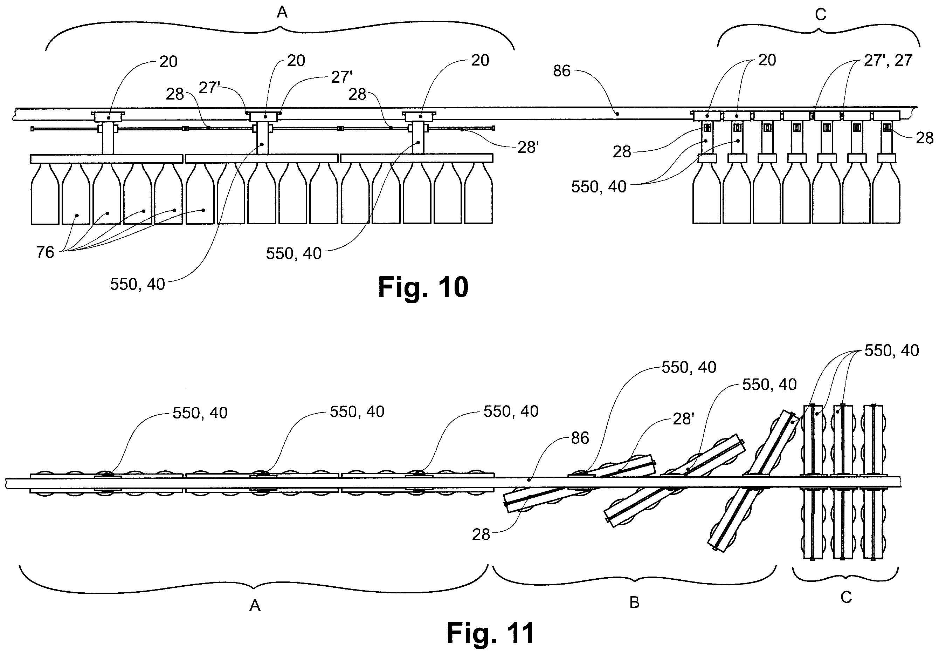

- Figur 10: zeigt schematisch in einer Seitenansicht die Anwendung von erfindungsgemässen Fördereinheiten ähnlich zu jener in Figur 9, wobei in einem Bereich A die Haltevorrichtungen der Fördereinheiten in einem stabilen Zustand parallel zur Förderrichtung stehen, und in einem Bereich C in einem zweiten anderen Zustand quer zur Förderrichtung.
- Figur 11: zeigt schematisch in einer Aufsicht die Anwendung von erfindungsgemässen Fördereinheiten ähnlich zu jener in Figur 9, wobei im Bereich C die Haltevorrichtungen der Fördereinheiten in einem ersten stabilen Zustand quer zur Förderrichtung stehen, in einem Übergangsbereich B durch entsprechende Betätigungsmittel die Haltevorrichtungen vom ersten in den zweiten stabilen Zustand überführt werden, oder umgekehrt, und in einem Bereich A die Haltevorrichtungen in einem zweiten stabilen Zustand parallel zur Förderrichtung stehen.

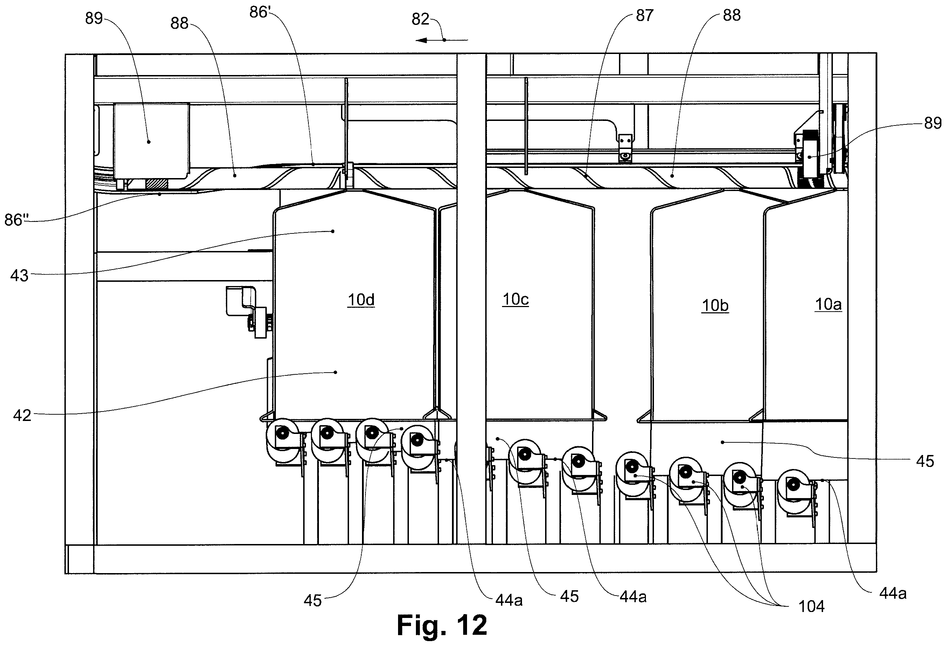

- Figur 12: zeigt schematisch in einer Seitenansicht eine vorteilhafte Ausführungsform einer Öffnungsvorrichtung zum Öffnen von Transporttaschen erfindungsgemässer Fördereinheiten in einem Fördersystem.

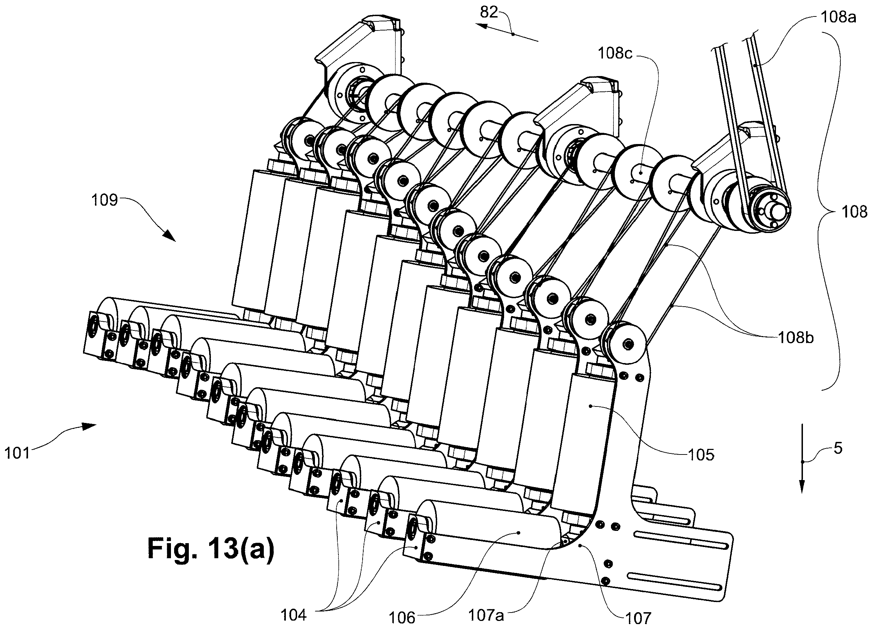

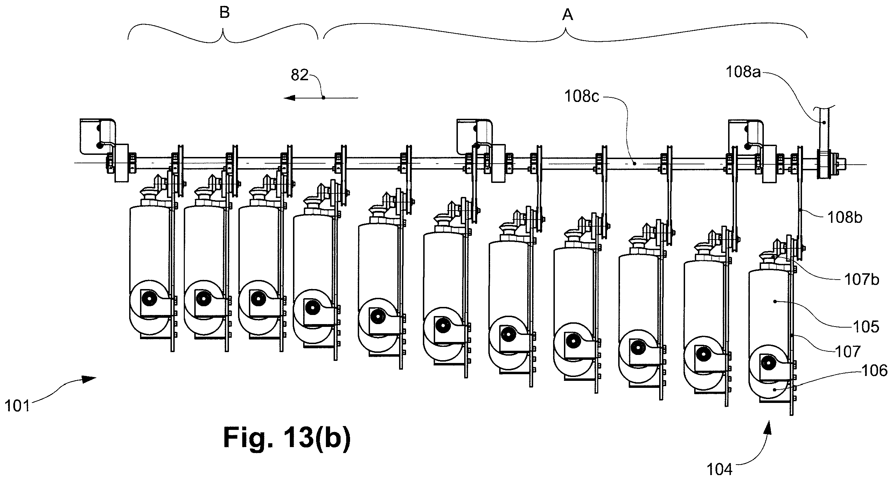

- Figur 13: zeigt schematisch die Öffnungsvorrichtung aus Figur 12 unter Weglassung weiterer Anlagenteile und der Fördereinheiten, (a) in einer perspektivischen Ansicht und (b) in einer Seitenansicht.

### Wege zur Ausführung der Erfindung

Eine erste mögliche Ausführungsform einer erfindungsgemässen Fördereinheit 10 ist in Figur 1 dargestellt. Ein Transportelement 40 in Form einer Transporttasche hat einen Aufhängehaken 41, der in einen Traghaken 21 eines Förderelements 20 eingehängt ist. Das Förderelement ist im gezeigten Beispiel ein Laufwagen einer schwerkraftgeförderten Hängeförderanlage, analog zu der Anlage wie sie beispielsweise in der WO 2016/030275 A1 der Anmelderin offenbart ist. Zum besseren Verständnis ist der Laufwagen 20 auf einer Laufschiene 86 eines Fördersystems dargestellt, wo er sich in eine vorgesehene Förderrichtung 82 bewegt.

Die Transporttasche umfasst eine Vorderwand 44, einen Bodenabschnitt 45 sowie eine Rückwand 42, die an den anstossenden Kanten schwenkbar verbunden sind. Vorderwand, Rückwand und Bogenabschnitt sind stabil ausgestaltet, und können beispielsweise aus einem geeigneten Plastikmaterial gefertigt sein, beispielsweise einer Hohlkammerplatte. Flexibel ausgestaltete Seitenwände 46 verbinden Vorderwand, Rückwand und Bodenabschnitt, so dass eine Tasche 47 mit einer Öffnung resultiert, in die mindestens eine Stückguteinheit 70 geladen werden kann. Im gezeigten Beispiel sind die Seitenwände aus einem feinmaschigen Netz gefertigt. Möglich ist auch die Verwendung eines flexiblen Textilmaterials. Die Seitenwände 46 sind so ausgestaltet, dass sie bei einem Zusammenfalten der Transporttasche wie unten beschrieben ebenfalls zusammengefaltet werden können.

Zwischen Vorderwand 44 und Rückwand 42 ist auf jeder Seite ein schwenkbar befestigter Distanzhalter 50 in Form eines Drahtbügels angeordnet. Die Distanzhalter 50 sind im Wesentlichen parallel zum Bodenabschnitt 45 angeordnet und gleich lang wie der Bodenabschnitt, und die Vorderwand 44 liegt im Wesentlichen parallel zur Rückwand 42, so dass entsprechend Rückwand 42, Distanzhalter 50, Vorderwand 44 und Bodenabschnitt 45 ein Parallelogramm bilden. Im unbeladenen Zustand lässt das Gewicht von Vorderwand und Bodenabschnitt die Vorderwand nach unten sinken, so dass die Transporttasche in einen zweiten Zustand übergeht, in welchem Vorderwand und Rückwand nahe beieinanderliegen. In dieser Konfiguration kann die Transporttasche platzsparend in einem Fördersystem aufbewahrt werden, indem die Fördereinheiten auf einer Laufschiene bündig hintereinander aufgereiht werden.

Durch Anheben der Vorderwand 44 und/oder des Bodenabschnitts 45 gegenüber der Rückwand 42 kann die Transporttasche von dem zweiten, zusammengefalteten Zustand in einen ersten, entfalteten Zustand überführt werden, wie er in Figur 1 gezeigt ist. Die nach oben gerichtete Öffnung der Tasche 47 der Transporttasche 40 hat nun die maximale Grösse.

Im gezeigten Ausführungsbeispiel ist in der Tasche 47 der Transporttasche 40 eine Stückguteinheit angeordnet, schematisch dargestellt durch ein quaderförmiges Objekt 70.

An einem unteren Ende der Rückwand 42 sind zwei Führungsrollen 54 angeordnet. Diese können dazu verwendet werden, die Transporttasche 40 bei der Förderung in einem Fördersystem bei der Verschiebung entlang der Förderrichtung 82 zusätzlich zu bewegen, indem beispielsweise eine oder beide Führungsrollen in einer Kulisse geführt werden. Analog können die zwei an einem oberen Ende der Vorderwand 44 angebrachten Führungsrollen 55 dazu verwendet werden, die Vorderwand 42 anzuheben.

Die Rückwand 42 ist an ihrem oberen Ende in einen Tragabschnitt 43 verlängert, an dessen oberem Ende der Aufhängehaken 41 in Form eines Drahtbügels schwenkbar mit der Rückwand 42 beziehungsweise dessen Tragabschnitt 43 verbunden ist. Der Bügel des Aufhängehakens 41 definiert eine Orientierungs-Ebene des Aufhängehakens, und damit der ganzen Transporttasche.

Der Traghaken 21 ist an einem von der Laufschiene 86 abgewandten unteren Ende des Laufwagens 20 angebracht. Er kann aus Metall gefertigt sein, oder aus einem geeigneten Polymermaterial, beispielsweise einem glasfaserverstärkten Thermoplastmaterial. Der Traghaken 21 verfügt über einen im montierten Zustand geschlossenen Bügel mit zwei Lagerungssegmenten 22, 23. Bei waagrechter Lage des Laufwagens entspricht das erste Lagerungssegment 22 dem tiefsten Punkt des Bügels des Traghakens. In der Figur 1 dargestellt befindet sich der Aufhängehaken 41 in einer ersten stabilen Position, bei welcher der Aufhängehaken in einem Minimum der potentiellen Energie in dem ersten Lagerungssegment 22 gelagert ist. In dieser stabilen Position ist der Aufhängehaken 41 in einer Ebene quer zur Förderrichtung 82 ausgerichtet, und eine Vorderseite 48 der Tasche der Transporttasche blickt in Förderrichtung 82.

Unter dem Begriff «quer» ist in diesem Zusammenhang jede Orientierung der Aufhängehaken-Ebene zu verstehen, bei welcher der Aufhängehaken nicht in einer Ebene im Wesentlichen parallel zur Förderrichtung 82 liegt. Im gezeigten Beispiel liegt der Aufhängehaken ebenso wie die Rückwand 42 in einer Ebene senkrecht zur Förderrichtung 82. Möglich wären aber auch andere Winkel, bei welcher sich Transporttaschen im leeren oder gefüllten Zustand platzsparend auf der Laufschiene hintereinander gereiht gelagert werden können.

Etwas erhöht gegenüber dem ersten Lagerungssegment 22 ist auf dem Traghaken 21 ein zweites Lagerungssegment 23 vorhanden, abgegrenzt durch einen kleinen Vorsprung 25 auf dem Bügel des Traghakens. Dieses zweite Lagerungssegment 23 entspricht ebenfalls einem lokalen Minimum der potentiellen Energie des im Traghaken aufgehängten Aufhängehakens 41. Der Aufhängehaken ist in dieser zweiten Position stabil. Der Aufhängehaken muss über den Vorsprung 25 gehoben werden, um von der ersten stabilen Position in die zweite stabile Position zu gelangen, und umgekehrt.

In der zweiten stabilen Position richtet sich der Aufhängehaken in einer Ebene im Wesentlichen parallel zur Förderrichtung aus. Der Begriff «im Wesentlichen parallel» ist dabei so zu verstehen, dass bei einer entsprechenden Ausrichtung des Aufhängehakens, und damit auch der Rückwand der Transporttasche, die Öffnung der Tasche für ein Befüllen von der Seite her, also quer zur Förderrichtung, gut zugänglich ist. Im gezeigten Ausführungsbeispiel entspricht die zweite stabile Position einer Ausrichtung der Aufhängehaken-Ebene parallel zur Förderrichtung 82. Möglich wäre jedoch auch eine Ausrichtung beispielsweise in einem Winkel von 30° bis 45° zur Förderrichtung 82. In einer solchen Position ist ebenfalls eine Beladung einer Transporttasche von der Seite her möglich, wobei jedoch kleinere Winkel von 30° oder kleiner für automatisierte Beladungsverfahren vorteilhafter sind, da die minimal notwendige Distanz zwischen der Öffnung der Transporttasche und einer Zufuhrvorrichtung kleiner wird. Für einen Winkel von 0°, also bei einer Orientierung des Aufhängehakens in einer Ebene parallel zur Förderrichtung, ist diese Distanz minimal.

Eine erfindungsgemässe Fördereinheit 10 mit einer alternativen Ausgestaltungsform eines Transportelements 40a ist in Figur 1A gezeigt. Das Transportelement 40a entspricht dabei im Wesentlichen der Transporttasche aus Figur 1, ohne Führungsrollen. Auf der Rückseite der Transporttasche 40a ist am unteren Ende des Tragabschnitts 43 mittig ein zweiter Haken 58 angeordnet, an welchem ein weiteres Transportelement angehängt werden kann. Im gezeigten Ausführungsbeispiel ist beispielhaft ein Kleiderbügel 240 mit dem Haken 241 am zweiten Haken 58 der Transporttasche 40a aufgehängt.

Eine solche Transporttasche hat den Vorteil, dass nicht nur Stückgutgüter 70 mit der Transporttasche transportiert und/oder eingelagert werden können, sondern zusätzlich oder alternativ auch Kleidungstücke auf Kleiderbügeln. Entsprechend wird nur ein Transportsystem benötigt sowohl für Stückgüter, die in die Tasche 47 eingebracht werden können, als auch für Güter, die üblicherweise hängend gelagert werden müssen, beispielsweise eben Kleidungsstücke auf Kleiderbügeln.

Der zweite Haken kann wie im gezeigten Beispiel an einem unteren Ende des Tragabschnitts angebracht sein, oder weiter oben. Beispielsweise kann ein Haken 58' am oberen Ende des Tragabschnitts angebracht sein, wie in Figur 1A gestrichelt dargestellt. Es können auch zwei oder mehr Haken angebracht werden.

Eine andere vorteilhafte Ausführungsform eines Transportelements 40b in Form einer Transporttasche, wie es in einer erfindungsgemässen Fördereinheit einsetzbar ist, wird in Figur 1B schematisch dargestellt. Dieses kann mit einem Laufwagen und Traghaken, wie sie an anderer Stelle dieser Beschreibung diskutiert werden, zu einem erfindungsgemässen Förderelement zusammengefügt werden.

Das Transporttaschen-Transportelement 40b umfasst eine Vorderwand 44, einen Bodenabschnitt 45' sowie eine Rückwand 42. Die Vorderwand 44 ist an ihrem unteren Ende und an ihrem oberen Ende durch obere Distanzhalteelemente 50 und untere Distanzhalteelemente 51 mit der Rückwand verbunden, wobei die Distanzhalteelemente in der Vorderwand und der Rückwand schwenkbar gelagert sind. Die Distanzelemente 50, 51 sind im gezeigten Ausführungsbeispiel als Drahtbügel realisiert.

Vorderwand 48 und Rückwand 42 sind stabil ausgestaltet, und können beispielsweise aus einem geeigneten Plastikmaterial gefertigt sein, beispielsweise einer stabilen und gleichzeitig leichten Hohlkammerplatte. Anders als beim Ausführungsbeispiel in Figur 1 ist der Bodenabschnitt aus einem flexiblen Material gefertigt, beispielsweise einer reissfesten Plastikfolie. Die mechanisch stabile Verbindung am unteren Ende von Vorderwand und Rückwand wird durch die unteren Distanzhalterelemente 51 erreicht.

Die Distanzhalterelemente 50, 51 sind im Wesentlichen parallel zueinander angeordnet und etwa gleich lang, und die Vorderwand 44 liegt im Wesentlichen parallel zur Rückwand 42, so dass entsprechend jeweils eine Kante der Rückwand 42, der anstossenden Distanzhalter 50, die entsprechende Kante der die Vorderwand 44 und der Distanzhalter 51 ein Parallelogramm bilden. Im unbeladenen Zustand lässt das Gewicht von Vorderwand und Bodenabschnitt die Vorderwand nach unten sinken, so dass die Transporttasche in einen zweiten Zustand übergeht, in welchem Vorderwand und Rückwand nahe beieinanderliegen. Die Vorteile dieser Konfiguration wurden bereits weiter oben diskutiert.

Flexibel ausgestaltete Seitenwände 46 verbinden Vorderwand 44, Rückwand 42, Bodenabschnitt 45' und das obere Distanzhalteelement 50 der entsprechenden Seite, so dass eine Tasche 47 mit einer Öffnung resultiert, die mit mindestens einer Stückguteinheit 70 beladen werden kann. Im gezeigten Beispiel sind die Seitenwände aus einem feinmaschigen Netz gefertigt. Möglich ist auch die Verwendung eines flexiblen Textilmaterials. Die Seitenwände 46 sind so ausgestaltet, dass sie bei einem Zusammenfalten der Transporttasche ebenfalls zusammengefaltet werden können.

Zur Erhöhung der mechanischen Stabilität sind die Distanzhalterelemente 50, 51 beim gezeigten Ausführungsbespiel zur Aussenseite hin leicht geknickt. Zudem führt dies dazu, dass die flexiblen Seitenwände sich beim Öffnen der Tasche eher nach aussen bewegen, was für das Einbringen von Stückgut vorteilhaft ist.

Durch Anheben der Vorderwand 44 gegenüber der Rückwand 42 kann die Transporttasche von dem zweiten, zusammengefalteten Zustand wie in Figur 1B(b) gezeigt in einen ersten, entfalteten Zustand überführt werden, wie in Figur 1B(a) gezeigt. Die nach oben gerichtete Öffnung der Tasche 47 der Transporttasche 40 hat nun die maximale Grösse.

Am unteren Ende der Rückwand 42 sind auf beiden Seiten Anschlagbügel 52 vorgesehen, welche sich in seitlicher Richtung nach aussen erstrecken. Diese Anschläge 52 stellen sicher, dass beim Anheben der Vorderwand 44 gegenüber der Rückwand 42 zur Öffnung der Tasche 47 die unteren Distanzhalterelemente 51 wie vorgesehen zur Vorderwand hin in die Waagrechte schwenken. Zum einen verhindern die Anschlagsbügel 52 ein Schwenken der Distanzhalterelemente 51 in die Gegenrichtung. Zum anderen sind sie näher an der Vorderwand angeordnet als die Schwenkachse der Distanzhalterelemente 51 auf der Rückwand, so dass die Distanzhalterelemente 51 im zweiten, zusammengefalteten Zustand der Tasche nicht vollständig senkrecht hängen, sondern bereits leicht in Richtung der Vorderwand geneigt sind, so dass eine von unten auf die untere Kante der Vorderwand wirkende Kraft zuverlässig zu einem Öffnen der Tasche führt.

Die Rückwand 42 ist an ihrem oberen Ende in einen Tragabschnitt 43 verlängert, an dessen oberem Ende der Aufhängehaken 41 in Form eines Drahtbügels schwenkbar mit der Rückwand 42 beziehungsweise dessen Tragabschnitt 43 verbunden ist. Der Bügel des Aufhängehakens 41 definiert eine Orientierungs-Ebene des Aufhängehakens, und damit der ganzen Transporttasche.

Der Drahtbügel des Aufhängehakens 41 ist Teil eines stabilen Drahtgestänges, das sich ausgehend vom Drahtbügel 41 auf beiden Seiten entlang der oberen Kante des Tragabschnitts 43, den seitlichen Kanten des Tragabschnitts 43 und der daran anschliessenden seitlichen Kanten der Rückwand 42 zum unteren Ende der Rückwand erstreckt. Das Drahtgestänge bildet dort die Anschlagbügel 51 aus, und erstreckt sich weiter über einen Teil der unteren Kante der Rückwand. Entlang der Kanten ist das Drahtgestänge mit der Struktur der Rückwand und des Tragabschnitts verbunden und erhöht so deren mechanische Stabilität.

Eine zweite mögliche Ausführungsform einer erfindungsgemässen Fördereinheit 10 ist in Figur 2 dargestellt. Laufwagen-Förderelement 20 und Transporttasche 40 mit Aufhängehaken 41 entsprechen dem Ausführungsbeispiel in Figur 1, und sind bereits dort entsprechend diskutiert worden. Der Traghaken 21 verfügt über zwei Lagerungssegmente 22, 23, welche beide einem lokalen Minimum 65, 65' der potentiellen Energie eines im Traghaken 21 hängend gelagerten Aufhängehakens 41 entsprechen.

In Figur 2(a) befindet sich der Aufhängehaken 41 auf dem ersten Lagerungssegment 22, und nimmt im entsprechenden lokalen Minimum 65 der potentiellen Energie eine erste stabile Position ein. Der Aufhängehaken 41 und damit die Rückwand der Transporttasche 40 nimmt eine Ebene quer zur Laufrichtung 82 des Laufwagens 20 ein. In Figur 2(b) hingegen befindet sich der Aufhängehaken 41 auf dem zweiten Lagerungssegment 23, und nimmt auf diesem lokalen Minimum 65' der potentiellen Energie eine zweite stabile Position ein, in der er sich in einer Ebene im Wesentlichen parallel zur Laufrichtung 82 ausrichtet. Um zwischen der ersten stabilen Position und der zweiten stabilen Position hin und her zu gelangen, muss der Aufhängehaken einen dazwischenliegenden erhöhten Bereich 25 des Bügels des Traghakens 21 überwinden.

Bei den vorgenannten zwei Ausführungsbeispielen einer erfindungsgemässen Fördereinheit kann der Aufhängehaken durch Drehen des Aufhängehakens beziehungsweise der Transporttasche um die Längsachse zwischen den beiden stabilen Positionen hin und her überführt werden. Der Aufhängehaken überwindet dabei den trennenden Bereich 25 zwischen den beiden Lagerungssegmenten 22, 23.

Figur 2A zeigt eine weitere Ausführungsform einer erfindungsgemässen Fördereinheit 10. Das Laufwagen-Förderelement 20 und der Traghaken 21 entsprechen dem Ausführungsbeispiel in Figur 2, und sind bereits dort entsprechend diskutiert worden. Das Transportelement 40 ist ein Kleiderbügelelement in der Form eines Hänger-Kleiderbügels 240 mit Aufhängehaken 241. Am Kleiderbügel ist im operativen Betrieb ein Kleidungstück aufgehängt, dass der Übersichtlichkeit halber jedoch nicht dargestellt ist.

Analog zu Figur 2 kann der Aufhängehaken 241 des Kleiderbügels 240 im Traghaken 21 zwei stabile Positionen 61, 61' einnehmen. In einer ersten stabilen Position 61, wie in Figur 2A(a) gezeigt, lagert der Aufhängehaken 241 auf einem ersten Lagerungssegment 22 des Traghakens 21. Die Ebene des Kleiderbügelelements 241 steht im Wesentlichen quer zur Förderrichtung 82. In einer zweiten stabilen Position 62, wie in Figur 2A(b) gezeigt, lagert der Aufhängehaken 241 auf einem zweiten Lagerungssegment 23 des Traghakens 21. Die Ebene des Kleiderbügelelements 241 steht im Wesentlichen parallel zur Förderrichtung 82.

Eine Ausrichtung der Bügelebene quer zur Förderrichtung erlaubt eine platzsparende Förderung und Lagerung der beladenen Fördereinheiten. Eine Ausrichtung parallel zur Förderrichtung hingegen erlaubt unter anderem eine Aufsicht auf die Vorderseite und Rückseite des transportierten Kleidungsstücks, beispielsweise für eine visuelle Inspektion eines retournierten Kleidungsstücks.

Eine mögliche Ausführungsform eines erfindungsgemässen Fördersystems ist in der Figur 3 dargestellt, mit einer Anordnung zu Beladung von Transporttaschen. Die Fördereinheiten 10 entsprechen im Wesentlichen denjenigen aus Figur 1, wobei die Laufwagen 20 schematisch vereinfacht dargestellt sind.

Von links her wird über einen leicht geneigten Abschnitt der Laufschiene 86 eine Transporttasche 40 schwerkraftgetrieben zugeführt. Der Aufhängehaken befindet sich in der ersten stabilen Position, und ist zusammen mit der Rückwand der Transporttasche 40 quer zur Förderrichtung 82 ausgerichtet. Die noch leere Transporttasche 40 befindet sich im zweiten, zusammengeklappten Zustand, in welchem Vorderwand 44 und Bodenabschnitt 45 senkrecht an den Distanzhalterelementen 50 hängen, und die Tasche eine minimale Dicke aufweist.

Eine Tasche 40' wird nun mit entsprechenden externen Antriebsmitteln (nicht dargestellt) nach rechts weiterbefördert zu einer ersten Wirkanordnung 90 zur aktiven Drehung der Transporttasche. Im gezeigten Ausführungsbeispiel ist die Wirkanordnung 90 als Bürstenanordnung ausgestaltet, nämlich als senkrecht heb- und senkbarer Bürstendrehteller. Wenn sich die Transporttasche, immer noch in der ersten stabilen Position, über dem Drehteller befindet, wird dieser angehoben und kontaktiert den untersten Teil der Tasche, nämlich die Verbindungskante zwischen Vorderwand und Bodenabschnitt. Der Bürstendrehteller 90 dreht sich nun um 90° im Uhrzeigersinn, und schleppt dabei die Transporttasche 40' mit, die sich entsprechend um die Achse des Traghakens dreht. Der Aufhängehaken gelangt von der ersten stabilen Position in die zweite stabile Position, in welcher der Aufhängehaken parallel zur Förderrichtung 82 steht. Der Bürstendrehteller 90 senkt sich wieder, und die Transporttasche 40' verbleibt in der zweiten stabilen Position.

Die Drehung durch die Wirkanordnung muss nicht zwingend über den gesamten Drehwinkel erfolgen. Es ist ausreichend, wenn der Aufhängehaken dabei soweit gedreht wird, dass er die Erhebung des Bügels des Traghakens zwischen den beiden Lagerungssegmenten überwindet. Anschliessend gelangt der Aufhängehaken selbsttätig durch die Schwerkraft in die zweite stabile Position und Ausrichtung.

Die Transporttasche 40" wird nun weiter nach rechts gefördert, zu einem Öffnungsmittel 100 zum Überführen der Transporttasche in einen geöffneten Zustand. Im gezeigten Ausführungsbeispiel ist das Öffnungsmittel als Hebetisch 100 ausgestaltet, der die Vorderwand 44 der Transporttasche 40" anhebt, und so die Transporttasche in den ersten Zustand überführt. Die Öffnung der Tasche 47 der Transporttasche ist nun nach oben offen. Eine Stückguteinheit 70 kann nun in die Tasche 47 eingebracht werden, wie in der Figur schematisch dargestellt. Das Einbringen der Stückguteinheit 70 kann durch manuelles oder automatisiertes Einwerfen oder Einlegen erfolgen, beispielsweise über eine Rutsche, ein Förderband oder einen Roboterarm.

Der Hebetisch 100 wird anschliessend wieder abgesenkt. Da die Tasche 47 nicht mehr leer ist, kann die Transporttasche nicht vom ersten Zustand in den zweiten Zustand zurückkehren, und verbleibt in einem gefüllten Zwischenzustand.

Die nun beladene Tasche 40‴ wird weiter nach rechts gefördert, wobei sich dabei der Aufhängehaken weiterhin in der zweiten stabilen Position befindet. Mit einer weiteren Wirkanordnung 90' in Form eines heb- und senkbaren Drehtellers wird die Transporttasche 40‴ im Gegenuhrzeigersinn zurück in die erste stabile Position gedreht. Der Aufhängehaken und die Transportasche stehen nun wieder quer zur Förderrichtung 82. Die gefüllte Transporttasche wird nach rechts weiter gefördert und entsprechend ihrer weiteren Bestimmung im Fördersystem 80 weitertransportiert.

Eine andere mögliche Ausführungsform eines erfindungsgemässen Fördersystems 80 ist in Figur 3A dargestellt. Die lediglich schematisch dargestellten Fördereinheiten 10 umfassen Traghaken 41, wie sie obenstehend bereist diskutiert worden sind. Als Transportelemente sind keine Transporttaschen, sondern Kleiderbügel 241 vorgesehen.

Von links her wird über einen leicht geneigten Abschnitt der Laufschiene 86 ein mit einem Kleidungsstück 75 beladenes Kleidungsbügel-Transportelement 40 schwerkraftgetrieben zugeführt. Der Aufhängehaken 241 befindet sich in der ersten stabilen Position, und die Ebene des Kleiderbügels 241 ist quer zur Förderrichtung 82 ausgerichtet.

Ein Kleidungsbügel-Transportelement wird nun mit entsprechenden externen Antriebsmitteln (nicht dargestellt) nach rechts weiterbefördert zu einer ersten Wirkanordnung 90 zur aktiven Drehung des Kleiderbügels. Die lediglich schematisch dargestellte Wirkanordnung 90 kann beispielsweise als Bürstenanordnung ausgestaltet sein, welche durch schonende radiale Krafteinwirkung das Kleidungsbügel-Transportelement 40' in Bezug auf den Traghaken im Gegenuhrzeigersinn in die zweite stabile Position bringt. Der Aufhängehaken 241 gelangt von der ersten stabilen Position in die zweite stabile Position, in welcher der Aufhängehaken und die Ebene des Kleiderbügels parallel zur Förderrichtung 82 steht.

Das Kleidungsbügel-Transportelement 40' wird nun weiter nach rechts gefördert, wo eine Kamera 95 die Frontseite des transportierten Kleidungsstücks 75 aufnimmt. Gleichzeitig kann eine weitere Kamera (nicht dargestellt) die Rückseite des Kleidungsstücks aufnehmen. Anhand dieser Aufnahmen kann anschliessend beispielsweise die Art eines Kleidungsstücks und sein Zustand (zum Beispiel bei Retouren im Versandhandel) überprüft werden. Eine solche visuelle Inspektion kann anstatt mit elektronischen Mitteln auch mit dem menschlichen Auge durchgeführt werden.

Das Kleidungsbügel-Transportelement 40" wird weiter nach rechts gefördert, wobei sich dabei der Aufhängehaken weiterhin in der zweiten stabilen Position befindet. Mit einer weiteren Wirkanordnung (nicht dargestellt) wird das Kleidungsbügel-Transportelement 40" im Uhrzeigersinn zurück in die erste stabile Position gedreht. Der Aufhängehaken und das Kleidungsbügel-Transportelement stehen nun wieder quer zur Förderrichtung 82. Das Kleidungsbügel-Transportelement wird nach rechts weiter gefördert und entsprechend seiner weiteren Bestimmung im Fördersystem 80 weitertransportiert.

Eine weitere mögliche Ausgestaltungsform eines erfindungsgemässen Fördersystems 80 ist in Figur 4 schematisch ausgeführt. Eine Mehrzahl von Fördereinheiten mit noch leeren Transporttaschen 40' im zusammengefalteten zweiten Zustand wird in einem Zuführbereich in geschuppter Anordnung platzsparend bereitgestellt. Die Taschen können beispielsweise durch entsprechende Führungsmittel 102 in die geschuppte Anordnung gebracht und in dieser gehalten werden. In dieser geschuppten Anordnung sind die Aufhängehaken und die Transporttaschen bereits gegenüber der ersten stabilen Position quer zur Förderrichtung 82 verdreht. Wird nun die vorderste Transporttasche der Schuppenanordnung weiter nach rechts gefördert, so drückt im gezeigten Ausführungsbeispiel ein Bügel 103 diese Tasche weiter im Uhrzeigersinn um die Senkrechte, so dass der Aufhängehaken nun selbsttätig in die zweite stabile Position parallel zur Förderrichtung 82 übergeht. Die Tasche 40" kann nun wieder mit einem geeigneten Öffnungsmittel 100 in den ersten Zustand überführt werden.

Nach erfolgtem Beladen der Transporttasche 40‴ wird diese wieder mit geeigneten Mitteln (nicht dargestellt) in die erste stabile Position überführt, und zur weiteren Verwendung ins Fördersystem 80 weitergeführt.

Das Ausführungsbeispiel aus Figur 4 hat den besonderen Vorteil, dass die Zykluszeit gesenkt werden kann. Eine zu befüllende leere Transporttasche muss nur über eine kurze Distanz zugeführt werden und ist zu einem erheblichen Teil bereits von der ersten stabilen Position in Richtung zweite stabile Position gedreht. Das verbleibende Schwenken der Transporttasche in eine Ausrichtungsebene parallel zur Förderrichtung erfolgt dann im Wesentlichen selbsttätig.

In einer weiteren, nicht dargestellten Ausführungsform eines Fördersystems erfolgt die Drehung der zugeführten leeren Transporttaschen durch Kulissen für die Führungsrollen 54. Während eine Transporttasche in der ersten stabilen Position quer zur Förderrichtung 82 zugeführt wird, gleiten eine oder beide der Führungsrollen 54 der Tasche in eine Kulisse beziehungsweise Führungsschiene. Durch geeignete Anordnung der Führungsschiene wird bei der weiteren Förderung der Transporttasche entlang des Förderwegs die Transporttasche um die Achse des Traghakens gedreht und gelangt in die zweite stabile Position. Die Führungskulissen sind nun nicht mehr notwendig. Nach dem Öffnen und Befüllen der Transporttasche kann diese auf analoge Weise wieder von der zweiten stabilen Position in die erste stabile Position geschwenkt werden.

Diese Variante hat den besonderen Vorteil, dass eine Transporttasche zum Drehen zwischen der ersten und der zweiten stabilen Position nicht gestoppt werden muss, was die Zykluszeit senkt.

Die verschiedenen dargestellten Wirkanordnungen zum Drehen der Transporttaschen können auch kombiniert werden. Zudem kann der Fachmann andere Betätigungsmittel verwenden, mit welchen eine Drehung der Transporttaschen erreicht werden kann. Beispielsweise können rotierende Vorrichtungen vorgesehen sein, welche die Taschen anstossen und so eine Drehung bewirken. Ebenfalls möglich sind lineare Aktuatoren, die eine Tasche anstossen und so drehen können.

Das Öffnungsmittel kann auch als Rampe ausgestaltet sein, die so angeordnet ist, dass der Bodenabschnitt einer leeren Tasche bei der Förderung von der Rampe kontinuierlich angehoben wird, so dass die Tasche in den ersten, geöffneten Zustand übergeht.

Eine weitere Möglichkeit ist die Verwendung eines rampenförmigen Förderbands, das analog zur oben genannten Rampe verläuft, jedoch den Vorteil hat, dass die Transporttasche an ihrem unteren Ende aktiv mitbewegt wird, so dass die Öffnung der Tasche sehr kontrolliert erfolgen kann.

In einer weiteren, dritten möglichen Ausführungsform einer erfindungsgemässen Fördereinheit wie in Figur 5 dargestellt erfolgt der Übergang zwischen einer ersten stabilen Position und einer zweiten stabilen Position des Aufhängehakens durch Drehen des Traghakens 21 im Raum.

Förderelement 20 und Transporttasche 40 mit Aufhängehaken 41 entsprechen wiederum dem Ausführungsbeispiel in Figur 1, und sind bereits dort entsprechend diskutiert worden. Der Traghaken 21 der Fördereinheit 10 ist derart ausgestaltet, dass in zwei bestimmten Lagen des Traghakens 21 im Raum jeweils ein Lagerungssegment einem Minimum der potentiellen Energie des Aufhängehakens 41 im Traghaken 21 entspricht, also einer stabilen Position des Aufhängehakens.

Die erste stabile Position ist in Figur 5 nicht dargestellt. Sie entspricht im Wesentlichen der Situation in Figur 2(a), in welcher der Laufwagen 20 waagrecht auf der Laufschiene 86 angeordnet ist, und der Traghaken 21 im Wesentlichen senkrecht nach unten ausgerichtet ist. Der Aufhängehaken 41 befindet sich in der ersten stabilen Position im lokalen Minimum 65 der potentiellen Energie, auf dem ersten Lagerungssegment 22. Der Aufhängehaken 41 ist in einer Ebene quer zur Förderrichtung 82 ausgerichtet.

In der Situation wie in Figur 5 dargestellt hingegen ist die Laufschiene 86 und der darauf montierte Laufwagen 20 um einen Winkel von ca. 45° um die Förderrichtung 82 gedreht. Entsprechend ist auch der Traghaken 21 um einen Winkel von ca. 45° aus der Senkrechten gedreht. In dieser Orientierung des Traghakens 21 im Raum entspricht nun nicht mehr länger das erste Lagerungssegment 22, sondern das zweite Lagerungssegment 23 einem Minimum 65' der potentiellen Energie des Aufhängehakens 41 im Bügel des Traghakens 21. Der Aufhängehaken 41 befindet sich in einer zweiten stabilen Position, und ist in einer Ebene im Wesentlichen parallel zur Förderrichtung 82 ausgerichtet.

Das Überführen des Aufhängehakens hin- und her zwischen der ersten stabilen Position und der zweiten stabilen Position erfolgt beim gezeigten Ausführungsbeispiel durch Drehen des Traghakens 21 zusammen mit dem Laufwagen 20. Dies kann auf einfache Art erreicht werden, indem eine über einen ausreichend langen Bereich in sich verdrehte Laufschiene 86 bereitgestellt wird. Bei der Förderung des Laufwagens 20 durch einen entsprechenden Abschnitt der Laufschiene 86 wird der Laufwagen 20 und damit auch der Traghaken 21 ebenfalls gedreht. Gleichzeitig wird der Aufhängehaken 41 im Bügel des Traghakens 21 in eine neue, instabile Position hochgehoben, und gleitet schwerkraftgetrieben von der ersten, nicht mehr stabilen Position in die zweite stabile Position, oder umgekehrt. Dabei schenkt der Aufhängehaken 41 entsprechend zwischen den dazugehörigen Ausrichtungsebenen hin- und her.

Diese Ausgestaltungsform einer Fördereinheit hat den besonderen Vorteil, dass die Drehung des Aufhängehakens direkt in den Förderprozess integriert werden kann, ohne dass eine Fördereinheit zum Drehen des Aufhängehakens und der Transporttasche angehalten oder abgebremst werden muss. Entsprechend sind kurze Zykluszeiten möglich.

Ein weiterer Vorteil ist, dass verschiedene Typen von Transportelementen, beispielsweise Transporttaschen und Kleiderbügel, gleichzeitig eingesetzt werden können, ohne dass für die verschiedenen Typen von Transportelementen verschiedene Wirkanordnungen zur Drehung der jeweiligen Transportelemente benötigt werden.

In einer weiteren vorteilhaften Ausführungsvariante einer erfindungsgemässen Fördereinheit 10, wie sie in Figur 5A gezeigt wird, ist der Traghaken 21 derart ausgestaltet, dass in einer ersten bestimmten Lage des Traghakens 21 im Raum (vgl. Senkrechte 5) ein Lagerungssegment 22 einem lokalen Minimum der potentiellen Energie des Aufhängehakens 41 im Traghaken 21 entspricht, also einer stabilen Position des Aufhängehakens. Diese erste Lage ist in Figur 5A(a) ersichtlich, und ist analog zu der Ausrichtung beispielsweise in Figur 1(a). Der Aufhängehaken 41 befindet sich in der einzigen stabilen Position, wobei dabei das Transportelement quer zur Förderrichtung ausgerichtet ist.

In einer zweiten bestimmten Lage des Traghakens 21 im Raum, wie in Figur 5A(b) gezeigt, die einer Drehung gegenüber der Senkrechten 5 um 45° entspricht, weist der Traghaken zwei Lagerungssegmente 22, 23 auf, die einem lokalen Minimum der potentiellen Energie des Aufhängehakens im Traghaken entsprechen, also zwei möglichen stabilen Positionen des Aufhängehakens. Das erste Lagerungssegment 22 entspricht dabei dem einzigen Lagerungssegment 22 in der ersten bestimmten Lage des Traghakens im Raum, bei welchem das Transportelement quer zur Förderrichtung steht. Beim zweiten Lagerungssegment 23 ist das Transportelement parallel zur Förderrichtung ausgerichtet.

Wird der Traghaken ausgehend von der Orientierung wie in Figur 5A(a) gezeigt um 45° gedreht, so verbleibt beim Drehen des Traghakens von der ersten in die zweite Ausrichtung der Aufhängehaken 41 im Traghaken 21 vorerst in der gleichen stabilen Position auf Lagerungssegment 22 (gestrichelt dargestellt). Jedoch kann nun durch Rotation des Transportelements, beispielsweise durch eine auf das Transportelement wirkende tangentiale Kraft, der Aufhängehaken 41 im Traghaken 21 von dieser ersten stabilen Position 22 in die zweite stabile Position 23 gebracht werden, wie in Figur 5A(b) gezeigt), und auch wieder in die erste stabile Position 22 zurück, jeweils unter Überwindung eines lokalen Maximums 25 der potentiellen Energie.

Wird der Traghaken 21 wieder in die erste bestimmte Lage gedreht, so rutscht der Aufhängehaken 41 gravitationsgetrieben von der zweiten, nun nicht mehr stabilen Position 23 im Traghaken direkt zurück in die nun einzige stabile Position 22 wie in Figur 5A(a) dargestellt. Wenn der Aufhängehaken 41 sich bereits in der ersten stabilen Position 23 im Traghaken befindet, so verbleibt er natürlich dort.

Eine solche Fördereinheit hat den Vorteil, dass in einer ersten Ausrichtung des Traghakens, welche der Standardausrichtung der Laufschiene entspricht, nur eine definierte Orientierung des Transportelements möglich ist. Soll die Möglichkeit des reversiblen Wechsels zwischen zwei Orientierungen des Transportelements aktiviert werden, so wird in einem entsprechenden Teilbereich des Förderwegs die Laufschiene um 45° verdreht angeordnet

Die dargestellte Ausführungsvariante kann natürlich auch mit Kleiderbügel-Transportelementen realisiert werden. Die Drehung des Aufhängehakens und des Kleiderbügels ohne Unterbrechung des Förderprozesses ist besonders für eine automatische visuelle Inspektion mit hoher Taktrate vorteilhaft, beispielweise für eine Qualitätskontrolle innerhalb eines Herstellungsprozesses.

Eine vierte mögliche Ausführungsform einer erfindungsgemässen Fördereinheit 10 mit einer Transporttasche 340 als Transportelement 40 ist in Figur 6 in einer Detailaufnahme offenbart. Der Förderwagen 20 ist dabei lediglich schematisch dargestellt. Von der Transporttasche 340 ist nur der Aufhängehaken 341a, 341b und das obere Ende des Tragabschnitts 343 sichtbar. Die Transporttasche 340 entspricht ansonsten den Transporttaschen aus den Figuren 1 und 1A.

Der Traghaken besteht aus einem ersten Traghakenelement 321a und einem zweiten Traghakenelement in Form eines Bolzens 321b, welches das erste Traghakenelement 321a verdrehsicher mit dem Laufwagen 20 verbindet. Das erste Traghakenelement 321 besteht aus einem zum Bolzen 321b gefluchteten Zylinder. Die dem Laufwagen 20 zugewandte Stirnfläche des Zylinders ist in einer vorteilhaften Art als gewellte Lagerfläche 326 ausgestaltet. Diese verfügt über radial gleichmässig beabstandete, radialsymmetrische Vertiefungen 324 und Erhöhungen 325. Im gezeigten Ausführungsbeispiel beträgt der Winkel zwischen zwei Vertiefungen 90°.

Der Aufhängehaken der Transporttasche besteht aus zwei Elementen 341a, 341b. Ein unteres bügelförmiges, zweites Element 341b ist mit dem Tragabschnitt 343 der Transporttasche verbunden. Am oberen Ende ist das bügelförmige, zweite Traghakenelement 341b mit einem ersten Traghakenelement 341a verbunden. Der Bügel 341b kann je nach vorgesehener Anwendung um eine horizontale Achse schwenkbar mit dem ersten Traghakenelement 341a verbunden sein, oder verdrehsicher. Das erste Traghakenelement 341a ist analog zum ersten Traghakenelement 321a ausgestaltet, mit einer dem Tragabschnitt zugewandten gewellten Lagerfläche mit vier Vertiefungen und vier Erhöhungen, die bündig auf der gewellten Lagerfläche des ersten Traghakenelements 341a aufliegt. Im Zentrum des ersten Traghakenelements 341a ist eine durchgehende Bohrung angeordnet, durch die der Bolzen 321b verläuft.

In der in Figur 6(a) gezeigten ersten stabilen Position ist der Tragabschnitt der Transporttasche im Wesentlichen quer zur Förderrichtung ausgerichtet. Eine mit «A» markierte Erhöhung auf der Lagerfläche des ersten Aufhängehakenelements 341a liegt in einer mit «B» markierten Vertiefung der Lagerfläche des ersten Traghakenelements 321a. Wird nun die Transporttasche 340 entlang der Achse durch den Bolzen 321b gedreht, so rutscht die Erhöhung «A» der Lagerfläche des ersten Aufhängehakenelements 341a auf der Lagerfläche des ersten Traghakenelements 321a nach oben, überwindet die mit «D» markierte Erhöhung der Lagerfläche des ersten Traghakenelements 321a, und rutsch wieder nach unten in eine stabile Position, wie in Figur 6(b) gezeigt. Die Erhöhung «A» der Lagerfläche des ersten Aufhängehakenelements 341a liegt nun in der mit «C» markierten Vertiefung der Lagerfläche des ersten Traghakenelements 321a. Der Aufhängehaken liegt nun in einer zweiten stabilen Position, in welcher der Tragabschnitt 343 der Transporttasche im Wesentlichen parallel zur Förderrichtung 82 verläuft.

Der Winkel zwischen der ersten stabilen Position und der zweiten stabilen Position des Aufhängehakens 341a auf dem Traghaken 321a ist durch den Winkel zwischen zwei benachbarten Erhöhungen 325 gegeben. Im gezeigten Ausführungsbeispiel beträgt der Winkel entsprechend 90°. Es sind jedoch auch andere Winkel realisierbar, beispielsweise 30°, 45° oder 120°, solange ein ganzzahliges Mehrfaches davon 360° ergibt.

Eine solche Fördereinheit ist besonders vorteilhaft, weil sie nicht nur eine Drehung zwischen zwei stabilen Positionen hin und her erlaubt, sondern eine weitergehende Drehung des Aufhängehakens in beiden Richtungen, jeweils in den vorgegebenen diskreten Winkelschritten.

Das erste Traghakenelement 321a und das erste Aufhängehakenelement 341a kann kostengünstig mit Spitzguss aus einem geeigneten Kunststoffmaterial gefertigt werden, beispielsweise aus HDPE.

Eine fünfte mögliche Ausführungsform einer erfindungsgemässen Fördereinheit 10 ist in Figur 7 dargestellt. Der Traghaken 321a, 321b entspricht demjenigen aus Figur 6, ebenso wie das erste Aufhängehakenelement 441a. Das zweite Aufhängehakenelement 441b ist als geschlossener Bügel ausgestaltet. In diesen Bügel ist wiederum ein Haken 243 eines Kleiderbügels 240 eingehängt.

Eine sechste mögliche Ausführungsform einer erfindungsgemässen Fördereinheit 10 ist in Figur 8 gezeigt. Das Transportelement 40 ist als Kleiderbügel 540 ausgestaltet. Der Traghaken besteht aus zwei Traghakenelementen 521a, 521b. Ein erstes Traghakenelement 521a umfasst eine gewellte Lagerfläche analog zu den Ausführungsformen in den Figuren 6 und 7. Dieses ist durch zwei Stangen des zweiten Traghakenelements 521b mit einem Laufwagen 20 verbunden. Der Aufhängehaken des Transportelements 40 besteht aus zwei Aufhängehakenelementen 541a, 541b. Ein erstes Aufhängehakenelement 541a umfasst eine gewellte Lagerfläche analog zu den Ausführungsformen in den Figuren 6 und 7. Das zweite Aufhängehakenelement in Form eines Stabs oder Bolzens 541b verläuft durch eine Bohrung des ersten Traghakenelements 521a und verbindet das erste Aufhängehakenelement 541a mit dem Kleiderbügel 540.

Eine solche Variante einer erfindungsgemässen Fördereinheit ist besonders vorteilhaft in Fällen, wo Kleidungsstücke für die weitere Verarbeitung temporär auf Kleiderbügel aufgehängt werden, beispielsweise für die Verarbeitung von Retouren im Versandhandel, oder für Garderoben.

Eine siebte mögliche Ausführungsform einer erfindungsgemässen Fördereinheit 10 ist in Figur 8 dargestellt. Das Transportelement ist in dieser Ausführungsvariante als Haltevorrichtung 550 für eine Mehrzahl von Behältern 76 ausgestaltet. Im gezeigten Beispiel hält die lediglich schematisch gezeigte Haltevorrichtung 550 mit zwei parallelen Halteelementen 551 formschlüssig und/oder kraftschlüssig fünf in Reihe angeordnete Behälter 76. Mittels einem schematisch gezeigten Betätigungselements 552 können die Behälter freigegeben beziehungsweise reversibel fixiert werden. Das Betätigungselement kann dabei durch integrierte oder externe Aktuatorvorrichtungen oder auch manuell betätigt werden.

Der Traghaken entspricht im Wesentlichen dem Traghaken wie er in Figur 8 gezeigt ist, Der Traghaken umfasst zwei Traghakenelemente 521a, 521b, von denen ein erstes Traghakenelement 521a eine gewellte Lagerfläche umfasst, und durch zwei Stangen des zweiten Traghakenelements 521b mit dem Laufwagen 20 verbunden ist. Der Aufhängehaken des Transportelements 40 besteht aus zwei Aufhängehakenelementen 541a, 541b, von denen ein erstes Aufhängehakenelement 541a eine gewellte Lagerfläche umfasst. Das zweite Aufhängehakenelement in Form eines Stabs oder Bolzens 541b verläuft durch eine Bohrung des ersten Traghakenelements 521a und verbindet das erste Aufhängehakenelement 541a mit der Haltevorrichtung 550 für Behälter.

In der in Figur 9 gezeigten Konfiguration befindet sich der Aufhängehaken in einer ersten stabilen Position, in welcher die Haltevorrichtung 550 im Wesentlichen quer zur Laufschiene 86 und Förderrichtung 82 steht. In dieser Konfiguration lassen sich beladene oder leere Förderelemente 10 mit minimalem Platzbedarf entlang der Laufschiene 86 stauen, puffern beziehungsweise lagern.

Zwei Stossdämpferelemente 27, 27', die zur Laufschiene 86 gefluchtet beidseitig am Laufwagen 20 angebracht sind, stellen in dieser Konfiguration einen Mindestabstand zwischen einzelnen Fördereinheiten 10 sicher, und dienen als Stossdämpfer zwischen den Fördereinheiten. Die Stossdämpferelemente können beispielsweise als Blöcke aus einem geeigneten Elastomer ausgestaltet sein.

In einer zweiten, nicht dargestellten Konfiguration befindet sich der Aufhängehaken in einer zweiten stabilen Position, in welcher die Haltevorrichtung 550 im Wesentlichen parallel zur Förderrichtung 86 steht. In dieser Konfiguration befinden sich somit auch die Behälter der Haltevorrichtung gefluchtet und parallel zur Förderrichtung 86. In der zweiten Konfiguration ist es beispielsweise möglich, von einer Fördereinheit 10 zugeförderte Behälter 76 freizugeben, so dass sie von einem weiteren Fördermittel, beispielsweise einem Bandförderer zur weiteren Bearbeitung übernommen werden können. Alternativ können auch von einem weiteren Fördermittel wie beispielsweise dem bereits erwähnten Bandförderer zugeförderte Behälter von einer leeren Fördereinheit in der zweiten Konfiguration übernommen werden. Die erfindungsgemässe Fördereinheit 10 bietet dabei den Vorteil, dass dieser Transfer zwischen erfindungsgemässer Fördereinheit 10 kontinuierlich durchgeführt werden kann. Zu diesem Zweck müssen die Fördereinheiten auf ihrem Förderpfad und der andere Förderer während dem Transfer mit gleicher Geschwindigkeit parallel und in geeigneter Ausrichtung zueinander geführt werden. Die Haltevorrichtung wird vorteilhaft ebenfalls während der Förderung betätigt.

Auch eine visuelle Inspektion der Behälter ist in dieser Lage vereinfacht.

In Figur 10 wird schematisch die Anwendung von erfindungsgemässen Fördereinheiten ähnlich zu denjenigen aus Figur 9 gezeigt. Die lediglich schematisch gezeigten Fördereinheiten verfügen neben den in Förderrichtung wirksamen Stossdämpferelementen 27, 27' an den Laufwagen 20 zusätzlich über zwei Distanzhalteelemente 28, 28'. Die genannten Distanzhalteelemente sind im gezeigten Beispiel als Stäbe ausgestaltet, die parallel zur Haltevorrichtung am Aufhängehaken angeordnet sind.

Die Distanzhalteelemente 28, 28' überragen die Haltevorrichtung soweit, dass in gestauter, gestaffelter Anordnung der Fördereinheiten in der zweiten Konfiguration, wie sie im Abschnitt A des Förderwegs dargestellt ist, sich Behälter 76 oder Haltevorrichtungen 550 benachbarter Fördereinheiten nicht berühren können. Die Stossdämpferelemente 27, 27' der Laufwagen hingegen haben keine Funktion, da sie sich nicht berühren können.

In der ersten Konfiguration der Fördereinheiten, in welcher die Haltevorrichtungen quer zur Laufschiene ausgerichtet sind, wie in Abschnitt C der Figur 10 gezeigt, haben wiederum die Distanzhalteelemente 28, 28' keine Funktion. Die Stossdämpferelemente 27, 27' dienen hier als Distanzhalteelemente, wobei diese so angeordnet sind, dass sich auch in dieser Konfiguration Behälter benachbarter Fördereinheiten nicht berühren können.

In Figur 11 wird schematisch der Übergang zwischen der ersten Konfiguration der Fördereinheiten in Abschnitt C und der zweiten Konfiguration der Fördereinheiten in Abschnitt A gezeigt. Erfolgt der Transport der Fördereinheiten von links nach rechts, so drehen in Abschnitt B die auf dem Aufhängehaken gelagerte Haltevorrichtung um die Drehachse, unter Überwindung des labilen Zwischenzustands wie im Zusammenhang mit Figur 6 erläutert. Anschliessend rastet der Aufhängehaken um 90° gedreht in der neuen stabilen Position ein. Um die Drehung auszulösen, kann beispielsweise die Haltevorrichtung oder die Distanzhalteelemente durch eine geeignete Aktuatorvorrichtung angestossen werden.

Erfolgt die Förderung von rechts nach links, so drehen die in Abschnitt C die auf dem Aufhängehaken gelagerten Haltevorrichtungen um die Drehachse, bis zur Erreichung der neuen stabilen Konfiguration in Abschnitt A.

Eine weitere vorteilhafte Ausführungsform eines erfindungsgemässen Fördersystems ist in den Figuren 12 und 13 gezeigt, mit einer vorteilhaften Öffnungsvorrichtung 101 zum Öffnen von im Fördersystem geförderten Fördereinheiten 10 in Form von Transporttaschen. Die Fördereinheiten 10 entsprechen im Wesentlichen denjenigen aus Figur 5A.

Eine Vielzahl von leeren, zu befüllenden Fördertaschen werden in einem nicht dargestellten Abschnitt des Förderwegs in geschuppter Anordnung bereitgestellt, beispielsweise wie in Figur 4 gezeigt, oder auf andere Weise. Jeweils eine Fördereinheit wird freigegeben und an einen Schneckenantrieb übergeben. Der Schneckenantrieb als externes Antriebsmittel für die Fördereinheiten besteht aus Förderschnecken 88 mit dazugehörigen Antriebsmotoren 89. Die Förderschnecken weisen einen zylinderförmigen Körper auf, auf welchem ein schraubenförmiger Schlitz angeordnet ist, welcher als drehende Wirkkulisse 87 für einen darin angeordneten Führungsbolzen 29 eines Laufwagens 20 einer Fördereinheit 10 dient. Für eine gegebene Drehrichtung und Drehgeschwindigkeit der Förderschnecke 88 wird die Fördergeschwindigkeit des Laufwagens 20 auf der Laufschiene 89, und damit die Geschwindigkeit der transversalen Verschiebung der Fördereinheit 10 entlang des Förderpfades 82, durch die Steigung des Kulissenschlitzes 87 bestimmt. So nimmt beispielsweise im gezeigten Ausführungsbeispiel in einem rechtsliegenden Beschleunigungsbereich des Schneckenantriebs von rechts nach links die Steigung des Kulissenschlitzes kontinuierlich zu. Dies führt bei einer konstant schnell drehenden Förderschnecke 88 zu einer kontinuierlichen Beschleunigung einer anfänglich stehenden Fördereinheit 10. Die Fördereinheit bewegt sich von rechts nach links durch die Öffnungsvorrichtung 101 des Fördersystems.

Im Ausführungsbeispiel der Figur 12 ist die Laufschiene 86' in einem nicht dargestellten Bereich rechts von der Abbildung sowie im Bereich der Öffnungsvorrichtung 101 gegenüber der Senkrechten um 45° um die Förderachse verdreht. Für die Fördereinheiten 10, die denjenigen in Figur 5A entsprechen, führt dies zu einer Drehung der Laufwagen 20, und damit auch der Traghaken 21, um 45° gegenüber der Senkrechten. Für die entsprechenden Traghaken stehen in dieser Orientierung zwei stabile Ausrichtungen der Transporttasche zur Verfügung, quer zur Förderrichtung und parallel zur Förderrichtung.

Die Transporttaschen werden durch nicht dargestellte Mittel aus der Ausrichtung quer zur Förderrichtung in die parallele Ausrichtung überführt, und geschuppt bereitgestellt.

Wird nun eine einzelne Fördereinheit (in Figur 12 die Fördereinheit 10a) aus dem Schuppenspeicher freigegeben und vom Schneckenantrieb übernommen, so befindet sich die Transporttasche somit bereits in einer stabilen Konfiguration, in welcher die Transporttasche ohne externe Wirkmittel in der Ausrichtung parallel zur Förderrichtung verbleibt.

Nach dem Passieren der Öffnungsvorrichtung geht die Laufschiene 86' wieder in eine Konfiguration über, in welcher diese um 0° gegenüber der Senkrechten gedreht ist. In diesem Bereich 86" sind somit auch die Laufwagen 20 und die Traghaken 21 um 0° gegenüber der Senkrechten gedreht. In dieser Konfiguration gibt es nur eine stabile Ausrichtung der Transporttaschen im Traghaken, nämlich quer zur Förderrichtung. Beim Passieren des Übergangsbereichs der Laufschiene zwischen den Bereichen 86' und 86" drehen die parallel zur Förderrichtung 82 ausgerichteten Transporttaschen (in Figur 12 die Fördereinheit 10d) nun selbsttätig in die nun einzige stabile Position quer zur Fördervorrichtung. Eine zusätzliche Wirkvorrichtung wird nicht benötigt.

Die Öffnungsvorrichtung 101 ist in Figur 13 im Detail dargestellt. Die Öffnungsvorrichtung 101 umfasst eine Mehrzahl von Förder- und Hebeeinheiten 104, welche entlang des Förderpfads der Fördereinheiten gestaffelt angeordnet sind. Eine Förder- und Hebeeinheit 104 umfasst jeweils eine Rahmenstruktur 107, an der in einem Winkel von im Wesentlichen 90° zwei drehbar gelagerte Rollenelemente 105, 106 angeordnet sind. Die obere Rolle 105 und die untere Rolle 106 sind mit einer Antriebsanordnung 108 wirkverbunden. Im gezeigten Ausführungsbeispiel treibt ein nicht dargestellter Antriebsmotor über einen primären Antriebsriemen 108a eine Welle 108c der Antriebsanordnung an. Die Welle 108c der Antriebsanordnung wiederum treibt über eine Mehrzahl von sekundären Antriebsriemen 108b die einzelnen Förder- und Hebeeinheiten 104 an. Dabei treibt der sekundäre Antriebsriemen 108b über ein oberes Kegelradgetriebe 107a das obere Rollenelement 105 an, und dieses wiederum über ein unteres Kegelradgetriebe 107b das untere Rollenelement 106. Die Übersetzungen der Komponenten sind dabei so gewählt, dass alle Rollen aller Förder- und Hebeeinheiten die gleiche Drehgeschwindigkeit und den gleichen Drehsinn aufweisen.

Der Antrieb der Rollenelemente 105, 106 kann auch auf andere Weise erfolgen, beispielsweise durch separate Antriebe für die einzelnen Förder- und Hebeeinheiten oder die einzelnen Rollen, durch separate Antriebswellen für die oberen Rollen und unteren Rollen, durch eine serielle Wirkverbindung der unteren 106 beziehungsweise oberen Rollen 105 durch Stirnradgetriebe, oder Kombinationen davon.

Wird eine Fördereinheit 10a vom Förderantrieb in den Bereich der ersten Förder- und Hebeeinheit 104 ganz rechts gefördert, so berührt die untenliegende Kante 44a der Vorderwand 44 der leeren Transportasche der Fördereinheit 10 die untere Rolle 106.

In einem ersten Abschnitt Ader Öffnungsvorrichtung 101 sind die einzelnen Förder- und Hebeeinheiten 104 hintereinander langsam ansteigend angeordnet. Als Folge davon wird die untere Kante 44a der Transporttasche bei der Förderung der Fördereinheit 10 von rechts nach links durch Abschnitt A (entsprechend Fördereinheiten 10a, 10b, 10c) langsam durch die aufeinanderfolgenden unteren Rollen 106 nach oben gedrückt, während die restliche Tasche, insbesondere die Rückwand 42, nicht mit den Rollen wechselwirkt.

Die lediglich schematisch dargestellten Rollenelemente 105, 106 sind vorteilhaft als Bürstenrollen ausgestaltet, oder alternativ aus einem relativ nachgiebigen Schaumstoffmaterial. Die Nachgiebigkeit der Rollen minimiert den mechanischen Verschleiss an den Taschen, und stellt auch einen vibrationsarmen Übergang zwischen nacheinander folgenden Rollen sicher.

Aufgrund des Anhebens der unteren Kante 44a der Vorderwand 44 der Transporttasche, und damit der Vorderwand 44 selber, bewegt sich die Vorderwand aufgrund der Wirkverbindung 50, 51 mit der Rückwand 42 von der Rückwand weg in Richtung der oberen Rollenelemente 105. Die Taschenöffnung der Transporttasche öffnet sich kontinuierlich bis zum einem bestimmten, gewünschten Punkt.

Die rechtwinklig zueinander angeordneten unteren 106 und oberen 105 Rollenelemente stehen senkrecht zur Förderachse 82. Die Rollenelemente 105, 106 sind gegenüber der Senkrechten 5 leicht um die Förderachse 82 gedreht, beispielsweise um einen Winkel von 5-15°. Die Drehgeschwindigkeit der Rollen 105, 106 ist derart auf die Fördergeschwindigkeit der Fördereinheiten angepasst, dass die tangentiale Umfanggeschwindigkeit der Rollenelemente im Wesentlichen der Fördergeschwindigkeit der Fördereinheiten entspricht. Dies führt in Kombination dazu, dass die Rollenpaare 105, 106 einen ansteigenden Förder- und Hebekanal 109 bilden, in welchem die Taschen der Fördereinheiten zuverlässig geöffnet werden. Weiter stabilisiert der Kanal 109 die Transporttaschen, so dass auch bei hohen Fördergeschwindigkeiten Restschwingungen der Transporttasche in der stabilen Position am Traghaken in transversaler oder longitudinaler Richtung oder um die Senkrechte unterdrückt werden.

In einem nachfolgenden Abschnitt B der Öffnungsvorrichtung 101 ändert sich die Höhe der nacheinander folgenden Förder- und Hebeeinheiten 104 nicht mehr weiter. In dieser Konfiguration kann nun die Transporttasche der Fördereinheit 10d befüllt werden, beispielsweise durch manuellen oder automatischen Einwurf einer Stückguteinheit in die sich kontinuierlich weiterbewegende Transporttasche 10. Die Fördereinheit kann zu diesem Zweck verlangsamt werden, durch eine entsprechende Ausgestaltung der Förderschnecke 88.

Im gezeigten Ausführungsbeispiel sind im Abschnitt B drei Förder- und Hebeeinheiten hintereinander angeordnet. Diese Anzahl kann auch grösser sein, beispielsweise bei höheren Fördergeschwindigkeiten, damit die Transporttasche länger im geöffneten Zustand verbleiben kann.

Wenn eine Fördereinheit 10d am Ende des zweiten Abschnitts B die Öffnungsvorrichtung 101 verlässt, so fällt die Stützung der Vorderwand 44 weg. Die Vorderwand sinkt aufgrund des Eigengewichts und des Gewichts der eingebrachten Ladung nach unten, soweit es das Volumen der Ladung erlaubt. Gleichzeitig oder anschliessend verlässt die Fördereinheit den Bereich 86' der Laufschiene und geht in den Bereich 86" über, wodurch die Transportasche in die Ausrichtung quer zur Förderrichtung schwenkt, in der sie platzsparend gefördert, gepuffert und gelagert werden kann.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen.

## Patentansprüche

1. Fördereinheit (10) zum hängenden Transport von Transportelementen (40, 240, 340, 540, 550) in einem Fördersystem (80), insbesondere einem schienengeführten Fördersystem oder einem Förderkettensystem, mit einem Förderelement (20) mit einer Förderrichtung (82), insbesondere einem Laufwagen oder einem Förderkettenglied, einem an dem Förderelement (20) angebrachten Traghaken (21, 321a, 521a), einem Transportelement (40, 240, 340, 540, 550), und einem am Transportelement angebrachten Aufhängehaken (41, 241, 341a, 441a, 541a), wobei der Aufhängehaken im Traghaken hängend gelagert ist;
wobei der Traghaken (21, 321a, 521a) derart ausgestaltet ist, dass der Aufhängehaken (41, 241, 341a, 441a, 541a) im Traghaken (21, 321a, 521a) mindestens zwei stabile Positionen (61, 62) einnehmen kann, wobei der Aufhängehaken in einer ersten stabilen Position (61) gegenüber dem Aufhängehaken in einer zweiten stabilen Position (62) um einen Winkel gedreht ist; wobei der Traghaken (21, 321a, 521a) ein erstes Lagerungssegment (22) aufweist, auf welchem in einer bestimmten ersten räumlichen Orientierung des Traghakens der Aufhängehaken in der ersten stabilen Position (61) lagerbar ist, in welcher der Aufhängehaken in einer ersten Ebene ausgerichtet ist; und
wobei der Traghaken (21, 321a, 521a) ein zweites Lagerungssegment (23) aufweist, auf welchem in einer bestimmten zweiten räumlichen Orientierung des Traghakens, welche mit der ersten räumlichen Orientierung identisch oder von dieser verschieden ist, der Aufhängehaken die zweiten stabilen Position (62) lagerbar ist, in welcher der Aufhängehaken in einer zweiten Ebene ausgerichtet ist;
wobei der Aufhängehaken zwischen der ersten Position (61) und der zweiten Position (62) hin und her überführbar ist; und
**dadurch gekennzeichnet, dass**
die erste Ebene, in welcher sich der Aufhängehaken (41, 241, 341a, 441a, 541a) in der ersten stabilen Position (61) ausrichtet, im Wesentlichen quer zur Förderrichtung (82) steht; und die zweite Ebene, in welcher sich der Aufhängehaken in der zweiten stabilen Position (62) ausrichtet, im Wesentlichen parallel zur Förderrichtung steht.

2. Fördereinheit nach Anspruch 1, wobei der Aufhängehaken (41, 241, 341a, 441a, 541a) derart zwischen der ersten stabilen Position (61) und der zweiten stabilen Position (62) hin und her überführbar ist, dass der Aufhängehaken konstant auf dem Traghaken (21, 321a, 521a) aufliegt.

3. Fördereinheit nach Anspruch 1 oder 2, wobei der Aufhängehaken (41, 241, 341a, 441a, 541a b) in der ersten stabilen Position (61) auf dem ersten Lagerungssegment aufliegt, und in der zweiten stabilen Position (62) auf dem zweiten Lagerungssegment aufliegt; und wobei zwischen dem ersten Lagerungssegment und dem zweiten Lagerungssegment ein Verbindungssegment angeordnet ist, auf dem der Aufhängehaken gleitend zwischen der ersten stabilen Position und der zweiten stabilen Position hin und her überführbar ist.

4. Fördereinheit nach einem der Ansprüche 1 bis 3, wobei in einer bestimmten räumlichen Orientierung des Traghakens (21, 321a, 521a) der Aufhängehaken (41, 241, 341a, 441a, 541a) auf dem ersten Lagerungssegment (22) in einer ersten stabilen Position (61) lagerbar ist, in der sich der Aufhängehaken in der ersten Ebene ausrichtet; und in der gleichen räumlichen Orientierung des Traghakens der Aufhängehaken auf dem zweiten Lagerungssegment (23) in einer zweiten stabilen Position (62) lagerbar ist, in der sich der Aufhängehaken in der zweiten Ebene ausrichtet, wobei die erste Position (61) und die zweite Position (62) lokalen Minima (65) der potentiellen Energie des hängend gelagerten Transportelements (40, 240, 340, 540, 550) entsprechen; und wobei der Aufhängehaken durch Drehen des Aufhängehakens um einen bestimmten Drehwinkel um die Senkrechte zwischen der ersten stabilen Position (61) und der zweiten stabilen Position (62) hin und her überführbar ist.

5. Fördereinheit nach einem der Ansprüche 1 bis 3, wobei in einer bestimmten ersten räumlichen Orientierung des Traghakens (21) der Aufhängehaken (41) auf dem ersten Lagerungssegment (22) in einer ersten stabilen Position (61) lagerbar ist, in der sich der Aufhängehaken in der ersten Ebene ausrichtet; und in einer von der bestimmten ersten räumlichen Orientierung verschiedenen zweiten räumlichen Orientierung des Traghakens der Aufhängehaken auf dem zweiten Lagerungssegment (23) in einer zweiten stabilen Position (62) lagerbar ist, in der sich der Aufhängehaken in der zweiten Ebene ausrichtet, wobei in der bestimmten ersten räumlichen Orientierung des Traghakens die erste Position (61) einem Minimum (65) der potentiellen Energie des hängend gelagerten Transportelements entspricht und die zweite Position (62) keinem Minimum der potentiellen Energie entspricht; in der bestimmten zweiten räumlichen Orientierung des Traghakens die zweite Position (62) einem Minimum (65') der potentiellen Energie des hängend gelagerten Transportelements entspricht und die erste Position (61) keinem Minimum der potentiellen Energie entspricht; und der Traghaken durch Drehen um einen bestimmten Drehwinkel zwischen der bestimmten ersten räumlichen Orientierung des Traghakens und der bestimmten zweiten räumlichen Orientierung des Traghakens hin und her überführbar ist, so dass der Aufhängehaken schwerkraftgetrieben zwischen der ersten Position (61) und der zweiten Position (62) hin und her überführbar ist.

6. Fördereinheit nach Anspruch 5, wobei der Aufhängehaken (41) durch Drehen des Förderelements (20) um die Förderrichtung (82) zwischen der ersten Position (61) und der zweiten Position (62) hin und her überführbar ist.

7. Fördereinheit nach einem der Ansprüche 1 bis 3, wobei in einer bestimmten ersten räumlichen Orientierung des Traghakens (21, 321a, 521a) der Aufhängehaken (41, 241, 341a, 441a, 541a) auf dem ersten Lagerungssegment (22) in einer ersten stabilen Position (61) lagerbar ist, in der sich der Aufhängehaken in der ersten Ebene ausrichtet; und in einer von der bestimmten ersten räumlichen Orientierung verschiedenen zweiten räumlichen Orientierung des Traghakens der Aufhängehaken sowohl auf dem ersten Lagerungssegment (22) in der ersten stabilen Position (61) lagerbar ist, in der sich der Aufhängehaken in der ersten Ebene ausrichtet, als auch auf dem zweiten Lagerungssegment (23) in einer zweiten stabilen Position (62) lagerbar ist, in der sich der Aufhängehaken in der zweiten Ebene ausrichtet; wobei in der bestimmten ersten räumlichen Orientierung des Traghakens die erste Position (61) einem Minimum (65) der potentiellen Energie des hängend gelagerten Transportelements entspricht, und wobei in der zweiten räumlichen Orientierung die erste Position (61) und die zweite Position (62) lokalen Minima (65) der potentiellen Energie des hängend gelagerten Transportelements (40) entsprechen; und wobei in der zweiten räumlichen Orientierung des Traghakens der Aufhängehaken durch Drehen des Aufhängehakens um einen bestimmten Drehwinkel um die Senkrechte zwischen der ersten stabilen Position (61) und der zweiten stabilen Position (62) hin und her überführbar ist.

8. Fördersystem (80) zum geführten hängenden Transport von Transportelementen (40, 240, 340, 540, 550), insbesondere Transporttaschen und/oder Kleiderbügeln, entlang eines Förderwegs, insbesondere ein schienengeführtes Fördersystem oder ein Förderkettensystem, mit mindestens einer Fördereinheit (10) nach einem der Ansprüche 1 bis 7.

9. Fördersystem nach Anspruch 8, wobei die erste Ebene, in welcher sich der Aufhängehaken (41, 241, 341a, 441a, 541a) in der ersten stabilen Position (61) ausrichtet, im Wesentlichen quer zur Förderrichtung (82) steht; und die zweite Ebene, in welcher sich der Aufhängehaken in der zweiten stabilen Position (62) ausrichtet, im Wesentlichen parallel zur Förderrichtung steht.

10. Fördersystem nach Anspruch 8 oder 9, wobei eine Wirkanordnung (90) vorgesehen sind, mit welcher die Transportelemente (40, 240, 340, 540, 550) an einer bestimmten Stelle des Förderwegs um einen bestimmten Drehwinkel gedreht werden können, so dass der Aufhängehaken (41, 241, 341a, 441a, 541a) von der ersten Position (61) in die zweite Position (62) beziehungsweise von der zweiten Position in die erste Position überführt wird.

11. Fördersystem nach Anspruch 8 oder 9, wobei in einem bestimmten einen Abschnitt des Förderwegs der Traghaken (21, 321a, 521a) der Fördereinheit (10) derart ausgerichtet ist, dass der Aufhängehaken (41, 241, 341a, 441a, 541a) des Transportelements (40, 240, 340, 540, 550) eine erste stabile Position (61) einnimmt, und in einem bestimmten anderen Abschnitt der Traghaken der Fördereinheit derart ausgerichtet ist, dass der Aufhängehaken des Transportelements eine zweite stabile Position (62) einnimmt.

12. Fördersystem nach einem der Ansprüche 8 bis 11, wobei die Fördereinheit (10) eine Fördereinheit nach Anspruch 6 ist und der Aufhängehaken (41) durch Drehen des Förderelements (20) um die Förderrichtung (82) von der zweiten Position (62) in die erste Position (61) überführbar ist, und wobei Öffnungsmittel (100, 101) vorgesehen sind, mit welchen eine Transporttasche (40, 340) an einer bestimmten Stelle des Förderwegs in den ersten geöffneten Zustand gebracht werden kann, wobei sich dabei der Aufhängehaken (21, 321a) in der zweiten Position (62) befindet und die Rückwand (42, 43) der Transporttasche im Wesentlichen parallel zur Förderrichtung orientiert ist.

13. Fördersystem nach Anspruch 12, wobei als Öffnungsmittel (100, 101) eine Hebeanordnung vorgesehen ist, insbesondere ein Hebetisch (100) oder eine Rampenanordnung (101).

14. Fördersystem (80) zum geführten hängenden Transport von Transportelementen (40, 240, 340, 540, 550) entlang eines Förderwegs, insbesondere ein schienengeführtes Fördersystem oder ein Förderkettensystem, welches derart ausgestaltet ist, dass auf einem bestimmten Abschnitt des Förderwegs eine Mehrzahl von Transportelementen in geschuppter Anordnung bereitgestellt werden können, wobei das Fördersystem (80) mindestens eine Fördereinheit (10) nach einem der Ansprüche 1 bis 7 enthält.

15. Verfahren zum Einbringen von Stückgut (70) in Transportelemente (40, 340) eines Fördersystems (80), umfassend die Schritte:
- Bereitstellen eines Fördersystems (80) nach einem der Ansprüche 8 bis 13;
- Zuführen einer Fördereinheit (10) des Fördersystems entlang des Förderwegs, wobei der Aufhängehaken (41, 341a) des Transportelements (40, 340) sich in der ersten stabilen Position (61) befindet;
- Überführen des Aufhängehakens des Transportelements der genannten Fördereinheit von der ersten stabilen Position in die zweite stabile Position (62);
- Einbringen mindestens einer Stückguteinheit (70) in das aufnahmebereite Transportelement der genannten Fördereinheit; und
- Überführen des Aufhängehakens des genannten Transportelements von der zweiten stabilen Position in die erste stabile Position.

16. Verfahren zur visuellen Inspektion von auf Kleiderbügel-Transportelementen (40, 240, 540) eines Fördersystems (80) aufgehängten Kleidungstücken (75) oder in Behälter-Haltevorrichtungen (40, 550) eines Fördersystems gehaltenen Behältern (76), umfassend die Schritte:
- Bereitstellen eines Fördersystems (80) nach einem der Ansprüche 8 bis 13;
- Zuführen einer Fördereinheit (10) des Fördersystems entlang des Förderwegs, wobei der Aufhängehaken (41, 241, 541a) des Kleiderbügel-Transportelements (40, 240, 540) beziehungsweise des Behälter-Haltevorrichtungs-Transportelements (40, 550) sich in der ersten stabilen Position (61) befindet;
- Überführen des Aufhängehakens des Kleiderbügel-Transportelements beziehungsweise des Behälter-Haltevorrichtungs-Transportelements der genannten Fördereinheit von der ersten stabilen Position in die zweite stabile Position (62);
- visuelle Inspektion (95) der Vorderseite und/oder Rückseite eines auf dem Kleiderbügel-Transportelement aufgehängten Kleidungstücks (75) beziehungsweise eines in der Behälter-Haltevorrichtung des Transportelements gehaltenen Behälters (76); und
- Überführen des Aufhängehakens des Kleiderbügel-Transportelements beziehungsweise des Behälter-Haltevorrichtungs-Transportelements von der zweiten stabilen Position in die erste stabile Position.

## Claims

1. A conveying unit (10) for suspended transport of transport elements (40, 240, 340, 540, 550) in a conveying system (80), particularly a rail-guided conveying system or a conveyor chain system,
with a conveying element (20) with a conveying direction (82), in particular a trolley or a conveyor chain link, with a support hook (21, 321a, 521a) attached to the conveying element (20), a transport element (40, 240, 340, 540, 550), and a suspension hook (41, 241, 341a, 441a, 541a) attached to the transport element, wherein the suspension hook is mounted in a suspended manner in the support hook;
wherein the support hook (21, 321a, 521a) is designed such that the suspension hook (41, 241, 341a, 441a, 541a) can assume at least two stable positions (61, 62) in the support hook, wherein the suspension hook in a first stable position (61) is rotated by an angle relative to the suspension hook in a second stable position (62).
wherein the support hook (21, 321a, 521a) includes a first support segment (22) on which, in a given first spatial orientation of the support hook, the suspension hook can be supported in the first stable position (61) in which the suspension hook is aligned in a first plane;
and wherein the support hook (21, 321a, 521a) includes a second support segment (23), on which, in a certain second spatial orientation of the support hook, which is identical to or different from the first spatial orientation, the suspension hook can be supported in the second stable position (62), in which the suspension hook is aligned in a second plane;
wherein the suspension hook is transferable back and forth between the first position (61) and the second position (62);
and **characterized in that**
the first plane in which the suspension hook (41, 241, 341a, 441a, 541a) is aligned in the first stable position (61) is substantially perpendicular to the conveying direction (82); and the second plane in which the suspension hook is aligned in the second stable position (62) is substantially parallel to the conveying direction.

2. The conveying unit according to claim 1, wherein the suspension hook (41, 241, 341a, 441a, 541a) is transferable back and forth between the first stable position (61) and the second stable position (62) in such a way that the suspension hook constantly rests on the support hook (21, 321a, 521a).

3. The conveying unit according to claim 1 or 2, wherein the suspension hook (41, 241, 341a, 441a, 541a) rests on the first segment in the first stable position (61), and rests on the second segment in the second stable position (62); and wherein a connecting segment is arranged between the first segment and the second segment, on which the suspension hook can slide back and forth between the first stable position and the second stable position.

4. The conveying unit according to one of claims 1 to 3, wherein, in a certain spatial orientation of the support hook (21, 321a, 521a), the suspension hook (41, 241, 341a, 441a, 541a) can be supported on the first support segment (22) in a first stable position (61), in which the suspension hook is aligned in the first plane; and in the same spatial orientation of the support hook, the suspension hook can be supported on the second support segment (23) in a second stable position (62), in which the suspension hook is aligned in the second plane, wherein the first position (61) and the second position (62) correspond to local minima (65) of the potential energy of the suspended transport element (40, 240, 340, 540, 550); and wherein the suspension hook can be transferred back and forth between the first stable position (61) and the second stable position (62) by rotating the suspension hook by a certain rotation angle around the vertical axis.

5. The conveying unit according to one of claims 1 to 3, wherein, in a certain first spatial orientation of the support hook (21), the suspension hook (41) can be supported on the first support segment (22) in a first stable position (61), in which the suspension hook is aligned in the first plane, and in a different second spatial orientation of the support hook, the suspension hook can be supported on the second support segment (23) in a second stable position (62), in which the suspension hook is aligned in the second plane, wherein in the certain first spatial orientation of the support hook, the first position (61) corresponds to a minimum (65) of the potential energy of the suspended transport element, and the second position (62) does not correspond to a minimum of the potential energy; in the certain second spatial orientation of the support hook, the second position (62) corresponds to a minimum (65') of the potential energy of the suspended transport element, and the first position (61) does not correspond to a minimum of the potential energy; and the support hook can be transferred back and forth between the certain first spatial orientation of the support hook and the certain second spatial orientation of the support hook by rotating around a certain rotation angle, so that the suspension hook can be transferred gravity-driven back and forth between the first position (61) and the second position (62).

6. The conveying unit according to claim 5, wherein the suspension hook (41) can be transferred back and forth between the first position (61) and the second position (62) by rotating the conveying element (20) around the conveying direction (82).

7. The conveying unit according to one of claims 1 to 3, wherein, in a certain first spatial orientation of the support hook (21, 321a, 521a), the suspension hook (41, 241, 341a, 441a, 541a) can be supported on the first support segment (22) in a first stable position (61), in which the suspension hook is aligned in the first plane; and in a different second spatial orientation of the support hook, the suspension hook can be supported both on the first support segment (22) in the first stable position (61), in which the suspension hook is aligned in the first plane, and on the second support segment (23) in a second stable position (62), in which the suspension hook is aligned in the second plane; wherein in the certain first spatial orientation of the support hook, the first position (61) corresponds to a minimum (65) of the potential energy of the suspended transport element, and wherein in the second spatial orientation, the first position (61) and the second position (62) correspond to local minima (65) of the potential energy of the suspended transport element (40); and wherein in the second spatial orientation of the support hook, the suspension hook can be transferred back and forth between the first stable position (61) and the second stable position (62) by rotating the suspension hook by a certain rotation angle around the vertical axis.

8. A conveying system (80) for guided suspended transport of transport elements (40, 240, 340, 540, 550), particularly transport bags and/or clothes hangers, along a conveying path, particularly a rail-guided conveying system or a conveyor chain system, with at least one conveying unit (10) according to one of claims 1 to 7.

9. The conveying system according to claim 8, wherein the first plane, in which the suspension hook (41, 241, 341a, 441a, 541a) is aligned in the first stable position (61), is substantially perpendicular to the conveying direction (82); and the second plane, in which the suspension hook is aligned in the second stable position (62), is substantially parallel to the conveying direction.

10. The conveying system according to claim 8 or 9, wherein an actuating arrangement (90) is provided, with which the transport elements (40, 240, 340, 540, 550) can be rotated by a certain rotation angle at a certain point of the conveying path, so that the suspension hook (41, 241, 341a, 441a, 541a) is transferred from the first position (61) to the second position (62) or from the second position to the first position.

11. The conveying system according to claim 8 or 9, wherein in a certain section of the conveying path, the support hook (21, 321a, 521a) of the conveying unit (10) is aligned such that the suspension hook (41, 241, 341a, 441a, 541a) of the transport element (40, 240, 340, 540, 550) assumes a first stable position (61), and in a certain other section, the support hook of the conveying unit is aligned such that the suspension hook of the transport element assumes a second stable position (62).

12. The conveying system according to one of claims 8 to 11, wherein the conveying unit (10) is a conveying unit according to claim 6, and the suspension hook (41) can be transferred from the second position (62) to the first position (61) by rotating the conveying element (20) around the conveying direction (82), and wherein opening means (100, 101) are provided, with which a transport bag (40, 340) can be brought to the first opened state at a certain point of the conveying path, wherein the suspension hook (21, 321a) is in the second position (62) and the back wall (42, 43) of the transport bag is substantially oriented parallel to the conveying direction.

13. The conveying system according to claim 12, wherein a lifting assembly, particularly a lifting table (100) or a ramp assembly (101), is provided as the opening means (100, 101).

14. A conveying system (80) for guided suspended transport of transport elements (40, 240, 340, 540, 550) along a conveying path, particularly a rail-guided conveying system or a conveyor chain system, which is designed such that on a certain section of the conveying path a plurality of transport elements can be provided in a shingled arrangement, wherein the conveying system (80) includes at least one conveying unit (10) according to one of claims 1 to 7.

15. A method for introducing piece goods (70) into transport elements (40, 340) of a conveying system (80), comprising the steps of:
- Providing a conveying system (80) according to one of claims 8 to 13;
- Supplying a conveying unit (10) of the conveying system along the conveying path, wherein the suspension hook (41, 341a) of the transport element (40, 340) is in the first stable position (61);
- Transferring the suspension hook of the transport element of the said conveying unit from the first stable position to the second stable position (62);
- introducing at least one unit of piece goods (70) into the receiving-ready transport element of the said conveying unit; and
- Transferring the suspension hook of the said transport element from the second stable position to the first stable position.

16. Method for visual inspection of clothing items (75) suspended on clothes hanger transport elements (40, 240, 540) of a conveying system (80) or containers (76) held in container holding devices (40, 550) of a conveying system, comprising the steps of:
- Providing a conveying system (80) according to one of claims 8 to 13;
- Supplying a conveying unit (10) of the conveying system along the conveying path, wherein the suspension hook (41, 241, 541a) of the clothes hanger transport element (40, 240, 540) or the container holding device transport element (40, 550) is in the first stable position (61);
- Transferring the suspension hook of the clothes hanger transport element or the container holding device transport element of the said conveying unit from the first stable position to the second stable position (62);
- Visually inspecting (95) the front side and/or back side of a clothing item (75) suspended on the clothes hanger transport element, or of a container (76) held in the container holding device of the transport element; and
- Transferring the suspension hook of the clothes hanger transport element or the container holding device transport element from the second stable position to the first stable position.

## Revendications

1. Unité de transport (10) pour le transport suspendu d'éléments de transport (40, 240, 340, 540, 550) dans un système de transport (80), en particulier un système de transport guidé par rail ou un système de chaîne de transport,
avec un élément mouvant (20) avec une direction de transport (82), en particulier un chariot ou un maillon de chaîne de transport, un crochet porteur (21, 321a, 521a) monté sur l'élément mouvant (20), un élément de transport (40, 240, 340, 540, 550), et un crochet de suspension (41, 241, 341a, 441a, 541a) monté sur l'élément de transport, le crochet de suspension étant reposé de manière suspendue dans le crochet porteur ;
dans laquelle le crochet porteur (21, 321a, 541a) est conçu de telle sorte que le crochet de suspension (41, 241, 341a, 441a, 541a) puisse prendre au moins deux positions stables (61, 62) dans le crochet porteur (21, 321a, 541a), le crochet de suspension dans une première position stable (61) étant tourné d'un angle par rapport au crochet de suspension dans une deuxième position stable (62) ;
dans laquelle le crochet porteur (21, 321a, 521a) présente un premier segment de palier (22) sur lequel, dans une première orientation spatiale déterminée du crochet porteur, le crochet de suspension est reposable dans la première position stable (61) dans laquelle le crochet de suspension est aligné dans un premier plan ; et
dans laquelle le crochet porteur (21, 321a, 521a) présente un deuxième segment de palier (23) sur lequel, dans une deuxième orientation spatiale déterminée du crochet porteur qui est identique ou différente de la première orientation spatiale, le crochet de suspension est reposable dans la deuxième position stable (62) dans laquelle le crochet de suspension est aligné dans un deuxième plan ;
dans laquelle le crochet de suspension est transférable réciproquement entre la première position (61) et la deuxième position (62) ; et
**caractérisée en ce que**
le premier plan, dans lequel le crochet de suspension (41, 241, 341a, 441a, 541a) s'aligne dans la première position stable (61), est substantiellement transversal à la direction de transport (82) ; et le deuxième plan, dans lequel le crochet de suspension s'aligne dans la deuxième position stable (62), est substantiellement parallèle à la direction de transport.

2. Unité de transport selon la revendication 1, dans laquelle le crochet de suspension (41, 241, 341a, 441a, 541a) est transférable réciproquement entre la première position stable (61) et la deuxième position stable (62) de telle sorte que le crochet de suspension repose constamment sur le crochet porteur (21, 321a, 521a).

3. Unité de transport selon la revendication 1 ou 2, dans laquelle le crochet de suspension (41, 241, 341a, 441a, 541a b) repose sur le premier segment de palier dans la première position stable (61) et repose sur le deuxième segment de palier dans la deuxième position stable (62) ; et dans laquelle un segment de liaison est disposé entre le premier segment de palier et le deuxième segment de palier, sur lequel le crochet de suspension est transférable de manière coulissante réciproquement entre la première position stable et la deuxième position stable.

4. Unité de transport selon l'une quelconque des revendications 1 à 3, dans laquelle, dans une orientation spatiale déterminée du crochet porteur (21, 321a, 521a), le crochet de suspension (41, 241, 341a, 441a, 541a) est reposable sur le premier segment de palier (22) dans une première position stable (61) dans laquelle le crochet de suspension s'aligne dans le premier plan ; et dans la même orientation spatiale du crochet porteur, le crochet de suspension est reposable sur le deuxième segment de palier (23) dans une deuxième position stable (62) dans laquelle le crochet de suspension s'aligne dans le deuxième plan, la première position (61) et la deuxième position (62) correspondant à des minima locaux (65) de l'énergie potentielle de l'élément de transport (40, 240, 340, 540, 550) reposé de manière suspendue ; et dans lequel le crochet de suspension est transférable réciproquement entre la première position stable (61) et la deuxième position stable (62) en faisant tourner le crochet de suspension d'un angle de rotation déterminé autour de la perpendiculaire.

5. Unité de transport selon l'une quelconque des revendications 1 à 3, dans laquelle, dans une première orientation spatiale déterminée du crochet porteur (21), le crochet de suspension (41) est reposable sur le premier segment de palier (22) dans une première position stable (61) dans laquelle le crochet de suspension s'aligne dans le premier plan ; et dans une deuxième orientation spatiale différente de la première orientation spatiale déterminée du crochet porteur, le crochet de suspension est reposable sur le deuxième segment de palier (23) dans une deuxième position stable (62) dans laquelle le crochet de suspension s'aligne dans le deuxième plan, dans laquelle, dans la première orientation spatiale déterminée du crochet porteur, la première position (61) correspond à un minimum (65) de l'énergie potentielle de l'élément de transport suspendu et la deuxième position (62) ne correspond à aucun minimum de l'énergie potentielle ; dans la deuxième orientation spatiale déterminée du crochet porteur, la deuxième position (62) correspond à un minimum (65') de l'énergie potentielle de l'élément de transport suspendu et la première position (61) ne correspond à aucun minimum de l'énergie potentielle ; et le crochet porteur est transférable réciproquement entre la première orientation spatiale déterminée du crochet porteur et la deuxième orientation spatiale déterminée du crochet porteur en tournant d'un angle de rotation déterminé, de sorte que le crochet de suspension est transférable réciproquement par gravité entre la première position (61) et la deuxième position (62).

6. Unité de transport selon la revendication 5, dans laquelle le crochet de suspension (41) est transférable réciproquement entre la première position (61) et la deuxième position (62) en faisant tourner l'élément mouvant (20) autour la direction de transport (82).

7. Unité de transport selon l'une quelconque des revendications 1 à 3, dans laquelle, dans une première orientation spatiale déterminée du crochet porteur (21, 321a, 521a), le crochet de suspension (41, 241, 341a, 441a, 541a) est reposable sur le premier segment de palier (22) dans une première position stable (61) dans laquelle le crochet de suspension s'aligne dans le premier plan ; et dans une deuxième orientation spatiale différente de la première orientation spatiale déterminée du crochet porteur, le crochet de suspension est reposable à la fois sur le premier segment de palier (22) dans la première position stable (61), dans laquelle le crochet de suspension s'aligne au premier plan, ainsi que sur le deuxième segment de palier (23) dans une deuxième position stable (62) dans laquelle le crochet de suspension s'aligne au deuxième plan ; dans laquelle, dans la première orientation spatiale déterminée du crochet porteur, la première position (61) correspond à un minimum (65) de l'énergie potentielle de l'élément de transport suspendu, et dans laquelle, dans la deuxième orientation spatiale, la première position (61) et la deuxième position (62) correspondent à des minima locaux (65) de l'énergie potentielle de l'élément de transport suspendu (40) ; et dans laquelle, dans la deuxième orientation spatiale du crochet porteur le crochet de suspension est transférable réciproquement entre la première position stable (61) et la deuxième position stable (62) en tournant le crochet de suspension d'un angle de rotation déterminé autour de la perpendiculaire.

8. Système de transport (80) pour le transport suspendu guidé d'éléments de transport (40, 240, 340, 540, 550), en particulier de sacs de transport et/ou de cintres, le long d'une voie de transport, en particulier un système de transport guidé par rail ou un système de chaîne de transport, avec au moins une unité de transport (10) selon l'une des revendications 1 à 7.

9. Système de transport selon la revendication 8, dans lequel le premier plan dans lequel le crochet de suspension (41, 241, 341a, 441a, 541a) s'aligne dans la première position stable (61) est substantiellement transversal à la direction de transport (82) ; et le deuxième plan dans lequel le crochet de suspension s'aligne dans la deuxième position stable (62) est substantiellement parallèle à la direction de transport.

10. Système de transport selon la revendication 8 ou 9, dans lequel un agencement actif (90) est prévu, avec lequel les éléments de transport (40, 240, 340, 540, 550) peuvent être tournés d'un angle de rotation déterminé à un endroit déterminé de la voie de transport, de sorte que le crochet de suspension (41, 241, 341a, 441a, 541a) est transféré de la première position (61) à la deuxième position (62) ou de la deuxième position à la première position.

11. Système de transport selon la revendication 8 ou 9, dans lequel, dans une section déterminée de la voie de transport, le crochet porteur (21, 321a, 521a) de l'unité de transport (10) est aligné de telle sorte que le crochet de suspension (41, 241, 341a, 441a, 541a) de l'élément de transport (40, 240, 340, 540, 550) occupe une première position stable (61), et dans une autre section déterminée, le crochet porteur de l'unité de transport est aligné de telle sorte que le crochet de suspension de l'élément de transport occupe une deuxième position stable (62).

12. Système de transport selon l'une quelconque des revendications 8 à 11, dans lequel l'unité de transport (10) est une unité de transport selon la revendication 6 et le crochet de suspension (41) est transférable de la deuxième position (62) à la première position (61) en faisant tourner l'élément mouvant (20) autour de la direction de transport (82), et dans lequel sont prévus des moyens d'ouverture (100, 101) avec lesquels un sac de transport (40, 340) peut être amenée dans le premier état ouvert à un endroit déterminé de la voie de transport, le crochet de suspension (21, 321a) se trouvant dans la deuxième position (62) et la paroi arrière (42, 43) du sac de transport étant orienté substantiellement parallèlement à la direction de transport.

13. Système de transport selon la revendication 12, dans lequel un dispositif de levage est prévu comme moyens d'ouverture (100, 101), en particulier une table élévatrice (100) ou un dispositif de rampe (101).

14. Système de transport (80) pour le transport suspendu guidé d'éléments de transport (40, 240, 340, 540, 550) le long d'une voie de transport, en particulier un système de transport guidé par rails ou un système de chaîne de transport, qui est conçu de telle sorte qu'une pluralité d'éléments de transport peut être mis à disposition sur une section déterminée de la voie de transport dans une disposition à chevauchement, le système de transport (80) contenant au moins une unité de transport (10) selon l'une quelconque des revendications 1 à 7.

15. Procédé d'introduction de marchandises diverses (70) dans des éléments de transport (40, 340) d'un système de transport (80), comprenant les étapes suivantes :
- mettre à disposition un système de transport (80) selon lune des revendications 8 à 13 ;
- alimenter une unité de transport (10) du système de transport le long de la voie de transport, le crochet de suspension (41, 341a) de l'élément de transport (40, 340) se trouvant dans la première position stable (61) ;
- transférer le crochet de suspension de l'élément de transport de ladite unité de transport de la première position stable à la deuxième position stable (62) ;
- introduire au moins une unité de marchandises à la pièce (70) dans l'élément de transport réceptif de ladite unité de transport ; et
- transférer le crochet de suspension dudit élément de transport de la deuxième position stable à la première position stable.

16. Procédé d'inspection visuelle de vêtements (75) suspendus sur des éléments de transport de cintres (40, 240, 540) d'un système de transport (80) ou de récipients (76) maintenus dans des dispositifs de maintien de récipients (40, 550) d'un système de transport, comprenant les étapes suivantes :
- mettre à disposition un système de transport (80) selon l'une des revendications 8 à 13 ;
- alimenter une unité de transport (10) du système de transport le long de la voie de transport, le crochet de suspension (41, 241, 541a) de l'élément de transport du cintre (40, 240, 540) ou de l'élément de transport du dispositif de maintien de récipients (40, 550) se trouvant dans la première position stable (61) ;
- transférer le crochet de suspension de l'élément de transport du cintre ou de l'élément de transport du dispositif de maintien de récipients de ladite unité de transport de la première position stable à la deuxième position stable (62) ;
- inspecter (95) visuellement de l'avant et/ou de l'arrière d'un vêtement (75) suspendu sur l'élément de transport du cintre ou d'un récipient (76) maintenu dans le dispositif de maintien de récipients de l'élément de transport ; et
- transférer le crochet de suspension de l'élément de transport du cintre ou de l'élément de transport du dispositif de maintien de récipients de la deuxième position stable à la première position stable.
